# EUROPEAN PATENT APPLICATION

(11) **EP 4 738 930 A1**
(43) Date of publication of application: **06.05.2026**
(21) Application number: 23942909.5
(22) Date of filing: 29.06.2023
(51) Int. Cl.: H04W 40/22

(54) **RELAY COMMUNICATION METHOD AND APPARATUS, AND COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: ZHU, Chunhui, Beijing 100085 (CN)
(74) Representative: Stöckeler, Ferdinand
(86) International application number: PCT/CN2023/104281
(87) International publication number: WO 2025/000401

(57) **Abstract**

Disclosed in the embodiments of the present disclosure are a relay communication method and apparatus. The method comprises: receiving a first message transmitted by a second terminal, wherein the first message comprises an identifier of the second terminal; and transmitting the first message to a first network element by means of an access network device, wherein the identifier of the second terminal is used for retrieving, from subscription data stored in a second network element, subscription data corresponding to the second terminal, and the subscription data corresponding to the second terminal is used for indicating that the second terminal supports store-and-forward communication with a first terminal, such that when there is no end-to-end connection between an ambient power-enabled Internet of Things device and a network, the ambient power-enabled Internet of Things device can communicate with the network by means of a relay terminal, and regardless of whether the connection between the relay terminal and the network is available or unavailable, the ambient power-enabled Internet of Things device can communicate with the network successfully, thereby effectively improving the communication efficiency of a system.

## Description

### FIELD

The present disclosure relates to the field of communication technology, and in particular relates to a relay communication method and a relay communication apparatus, a communication device, a communication system and a storage medium.

### BACKGROUND

Ambient power-enabled Internet of Things (A-IoT) is an IoT service with an IoT device powered by energy harvesting, while the IoT device may be either battery-less or equipped with limited energy storage capability. Typically, an A-IoT device doesn't have a conventional battery. The device itself uses energy harvested from wireless radio waves or any other form of energy that can be harvested in particular cases.

### SUMMARY

Embodiments of the present disclosure provide a relay communication method and a relay communication apparatus, which may solve a problem of how to support communication when there is no end-to-end connection between an A-IoT device and a network in the related art.

According to a first aspect of embodiments of the present disclosure, there is provided a relay communication method, performed by a first terminal, including:
receiving a first message sent by a second terminal, in which the first message includes an identifier of the second terminal; and
sending the first message to a first network element via an access network device, in which the identifier of the second terminal is used to retrieve a subscription corresponding to the second terminal from subscriptions stored in a second network element, and the subscription corresponding to the second terminal is used to indicate that the second terminal supports a store-and-forward communication with the first terminal.

According to a second aspect of embodiments of the present disclosure, there is provided a relay communication method, performed by a second terminal, including:
sending a first message to a first terminal,
in which the first message is used be sent by the first terminal to a first network element via an access network device, the first message includes an identifier of the second terminal, the identifier of the second terminal is used to retrieve a subscription corresponding to the second terminal from subscriptions stored in a second network element, and the subscription corresponding to the second terminal is used to indicate that the second terminal supports a store-and-forward communication with the first terminal.

According to a third aspect of embodiments of the present disclosure, there is provided a relay communication method, performed by a first network element, including:
receiving a first message sent by a first terminal via an access network device, in which the first message includes an identifier of the second terminal; and
sending a sixth message to a second network element, in which the sixth message includes the identifier of the second terminal, the identifier of the second terminal is used to retrieve a subscription corresponding to the second terminal from subscriptions stored in the second network element, and the subscription corresponding to the second terminal is used to indicate that the second terminal supports a store-and-forward communication with the first terminal.

According to a fourth aspect of embodiments of the present disclosure, there is provided a relay communication method, performed by a second network element, including:
receiving a sixth message sent by a first network element, in which the sixth message includes an identifier of a second terminal; and
retrieving, according to the identifier of the second terminal, a subscription corresponding to the second terminal from stored subscriptions, in which the subscription corresponding to the second terminal is used to indicate that the second terminal supports a store-and-forward communication with a first terminal, and
in which the identifier of the second terminal is included in a first message sent by the first terminal to the first network element via an access network device.

With the solution proposed in the embodiments of the present disclosure, the first message sent by the second terminal is received, in which the first message includes the identifier of the second terminal; and the first message is sent to the first network element via the access network device, in which the identifier of the second terminal is used to retrieve the subscription corresponding to the second terminal from subscriptions stored in the second network element, and the subscription corresponding to the second terminal is used to indicate that the second terminal supports the store-and-forward communication with the first terminal. Therefore, communication with the network may be performed via a relay terminal in a case where there is no end-to-end connection between an A-IoT device and the network, and communication between the A-IoT device and the network may be performed successfully in a case where the connection between the relay terminal and the network is available or unavailable, thereby effectively improving the communication efficiency of the system.

### BRIEF DESCRIPTION OF THE DRAWINGS

In order to more clearly explain technical solutions in embodiments of the present disclosure or in the related art, the drawings necessary for embodiments of the present disclosure or the related art are described below.
FIG. 1 is a schematic diagram illustrating an architecture of a communication system according to embodiments of the present disclosure.
FIG. 2 is an interactive schematic diagram illustrating a relay communication method according to an embodiment of the present disclosure.
FIG. 3A is a flowchart illustrating a relay communication method according to embodiments of the present disclosure.
FIG. 3B is a flowchart illustrating a relay communication method according to embodiments of the present disclosure.
FIG. 3C is a flowchart illustrating a relay communication method according to embodiments of the present disclosure.
FIG. 4A is a flowchart illustrating a relay communication method according to embodiments of the present disclosure.
FIG. 4B is a flowchart illustrating a relay communication method according to embodiments of the present disclosure.
FIG. 4C is a flowchart illustrating a relay communication method according to embodiments of the present disclosure.
FIG. 5A is a flowchart illustrating a relay communication method according to embodiments of the present disclosure.
FIG. 5B is a flowchart illustrating a relay communication method according to embodiments of the present disclosure.
FIG. 6A is a flowchart illustrating a relay communication method according to embodiments of the present disclosure.
FIG. 6B is a flowchart illustrating a relay communication method according to embodiments of the present disclosure.
FIG. 7A is an interactive schematic diagram illustrating a relay communication method according to embodiments of the present disclosure.
FIG. 7B is an interactive schematic diagram illustrating a relay communication method according to embodiments of the present disclosure.
FIG. 8 is an interactive schematic diagram illustrating a system of a relay communication method according to embodiments of the present disclosure.
FIG. 9A is a block diagram illustrating a first terminal according to embodiments of the present disclosure.
FIG. 9B is a block diagram illustrating a second terminal according to embodiments of the present disclosure.
FIG. 9C is a block diagram illustrating a first network element according to embodiments of the present disclosure.
FIG. 9D is a block diagram illustrating a second network element according to embodiments of the present disclosure.
FIG. 9E is a block diagram illustrating a core network device according to embodiments of the present disclosure.
FIG. 10A is a block diagram illustrating a communication device according to embodiments of the present disclosure.
FIG. 10B is a block diagram illustrating a chip according to embodiments of the present disclosure.

### DETAILED DESCRIPTION

The present disclosure provides a relay communication method and a relay communication apparatus, a communication device, a communication system and a storage medium.

According to a first aspect of embodiments of the present disclosure, there is provided a relay communication method, performed by a first terminal, including:
receiving a first message sent by a second terminal, in which the first message includes an identifier of the second terminal; and
sending the first message to a first network element via an access network device, in which the identifier of the second terminal is used to retrieve a subscription corresponding to the second terminal from subscriptions stored in a second network element, and the subscription corresponding to the second terminal is used to indicate that the second terminal supports a store-and-forward communication with the first terminal.

In the above-described embodiment, in a case where there is no end-to-end connection between the first terminal and a network, communication with the network may be performed via a relay second terminal; further the relay second terminal supports the store-and-forward communication with the first terminal, such that the communication between the first terminal and the network may be performed successfully in a case where the connection between the relay second terminal and the network is available or unavailable, thereby effectively improving the communication efficiency of the system and improving the coverage of the network.

In connection with some embodiments of the first aspect, in some embodiments, the method further includes:
receiving a second message sent by the first network element via the access network device, in which the second message is used to indicate that the store-and-forward communication between the second terminal and the first terminal is authorized; and
sending the second message to the second terminal.

In the above-described embodiment, the second terminal may know that the network has authorized the store-and-forward communication between the second terminal and the first terminal, thereby improving the communication efficiency.

In connection with some embodiments of the first aspect, in some embodiments, the method further includes:
sending a third message to the first network element via the access network device, in which the third message includes an identifier of the first terminal, the identifier of the first terminal is used to retrieve a subscription corresponding to the first terminal from the subscriptions stored in the second network element, and the subscription corresponding to the first terminal is used to indicate that the first terminal supports the store-and-forward communication with the second terminal; and
receiving a fourth message sent by the first network element via the access network device, in which the fourth message is used to indicate that the store-and-forward communication between the first terminal and the second terminal is authorized.

In the above-described embodiment, the first terminal may know that the network has authorized the store-and-forward communication between the first terminal and the second terminal, thereby improving the communication efficiency.

In connection with some embodiments of the first aspect, in some embodiments, the method further includes:
sending a fifth message to the second terminal, in which the fifth message is used to instruct the second terminal to perform the store-and-forward communication with the first terminal.

In the above-described embodiment, the first terminal may know that the second terminal may perform the store-and-forward communication between the first terminal and the second terminal, and further perform the store-and-forward communication with the second terminal, thereby improving the communication efficiency.

In connection with some embodiments of the first aspect, in some embodiments, the method further includes:
in a case where a connection between the first terminal and the access network device is not available, receiving and storing information sent by the second terminal.

In the above-described embodiment, in a case where the connection between the relay second terminal and the network is not available, the communication between the first terminal and the network may also be performed successfully, thereby effectively improving the communication efficiency of the system and improving the coverage of the network.

In connection with some embodiments of the first aspect, in some embodiments, the method further includes:
in a case where a connection between the first terminal and the access network device is available, sending information sent by the second terminal and stored by the first terminal to the access network device; and/or
receiving information sent by the second terminal, and forwarding the information sent by the second terminal to the access network device.

In the above-described embodiment, in a case where the connection between the relay second terminal and the network is available or not available, the communication between the first terminal and the network may also be performed successfully, thereby effectively improving the communication efficiency of the system and improving the coverage of the network.

According to a second aspect of embodiments of the present disclosure, there is provided a relay communication method, performed by a second terminal, including:
sending a first message to a first terminal,
in which the first message is used to be sent by the first terminal to a first network element via an access network device, the first message includes an identifier of the second terminal, the identifier of the second terminal is used to retrieve a subscription corresponding to the second terminal from subscriptions stored in a second network element, and the subscription corresponding to the second terminal is used to indicate that the second terminal supports a store-and-forward communication with the first terminal.

In the above-described embodiment, in a case where there is no end-to-end connection between the first terminal and a network, communication with the network may be performed via a relay second terminal; further the relay second terminal supports the store-and-forward communication with the first terminal, such that the communication between the first terminal and the network may be performed successfully in a case where the connection between the relay second terminal and the network is available or unavailable, thereby effectively improving the communication efficiency of the system and improving the coverage of the network.

In connection with some embodiments of the second aspect, in some embodiments, the method further includes:
receiving a second message sent by the first terminal, in which the second message is sent by the first network element to the first terminal via the access network device, and the second message is used to indicate that the store-and-forward communication between the second terminal and the first terminal is authorized.

In connection with some embodiments of the second aspect, in some embodiments, the method further includes:
receiving a fifth message sent by the first terminal, in which the fifth message is used to instruct the second terminal to perform the store-and-forward communication with the first terminal.

In connection with some embodiments of the second aspect, in some embodiments, the method further includes:
in a case where a connection between the first terminal and the access network device is not available, sending information to the first terminal, in which the information is stored in the first terminal.

In connection with some embodiments of the second aspect, in some embodiments, the method further includes:
in a case where a connection between the first terminal and the access network device is available, forwarding, by the first terminal, information stored in the first terminal to the access network device; and/or
in a case where a connection between the first terminal and the access network device is available, sending information to the first terminal, in which the information is forwarded by the first terminal to the access network device.

According to a third aspect of embodiments of the present disclosure, there is provided a relay communication method, performed by a first network element, including:
receiving a first message sent by a first terminal via an access network device, in which the first message includes an identifier of the second terminal; and
sending a sixth message to a second network element, in which the sixth message includes the identifier of the second terminal, the identifier of the second terminal is used to retrieve a subscription corresponding to the second terminal from subscriptions stored in the second network element, and the subscription corresponding to the second terminal is used to indicate that the second terminal supports a store-and-forward communication with the first terminal.

In the above-described embodiment, a network may authorize the store-and-forward communication between the first terminal and the second terminal. In this way, in a case where there is no end-to-end connection between the first terminal and the network, communication with the network may be performed via the relay second terminal; further the relay second terminal supports the store-and-forward communication with the first terminal, such that the communication between the first terminal and the network may be performed successfully in a case where the connection between the relay second terminal and the network is available or unavailable, thereby effectively improving the communication efficiency of the system and improving the coverage of the network.

In connection with some embodiments of the third aspect, in some embodiments, the method further includes:
sending a second message to the first terminal via the access network device, in which the second message is sent by the first terminal to the second terminal, and the second message is used to indicate that the store-and-forward communication between the second terminal and the first terminal is authorized.

In connection with some embodiments of the third aspect, in some embodiments, the method further includes:
receiving a third message sent by the first terminal via the access network device, in which the third message includes an identifier of the first terminal;
sending a seventh message to the second network element, in which the seventh message includes the identifier of the first terminal, the identifier of the first terminal is used to retrieve a subscription corresponding to the first terminal from the subscriptions stored in the second network element, and the subscription corresponding to the first terminal is used to indicate that the first terminal supports the store-and-forward communication with the second terminal; and
sending a fourth message to the first terminal via the access network device, in which the fourth message is used to indicate that the store-and-forward communication between the first terminal and the second terminal is authorized.

According to a fourth aspect of embodiments of the present disclosure, there is provided a relay communication method, performed by a second network element, including:
receiving a sixth message sent by a first network element, in which the sixth message includes an identifier of a second terminal; and
retrieving, according to the identifier of the second terminal, a subscription corresponding to the second terminal from stored subscriptions, in which the subscription corresponding to the second terminal is used to indicate that the second terminal supports a store-and-forward communication with a first terminal, and
in which the identifier of the second terminal is included in a first message sent by the first terminal to the first network element via an access network device.

In the above-described embodiment, a network may authorize the store-and-forward communication between the first terminal and the second terminal. In this way, in a case where there is no end-to-end connection between the first terminal and the network, communication with the network may be performed via the relay second terminal; further the relay second terminal supports the store-and-forward communication with the first terminal, such that the communication between the first terminal and the network may be performed successfully in a case where the connection between the relay second terminal and the network is available or unavailable, thereby effectively improving the communication efficiency of the system and improving the coverage of the network.

In connection with some embodiments of the fourth aspect, in some embodiments, the method further includes:
receiving a seventh message sent by the first network element, in which the seventh message includes an identifier of the first terminal; and
retrieving, according to the identifier of the first terminal, a subscription corresponding to the first terminal from the stored subscriptions, in which the subscription corresponding to the first terminal is used to indicate that the first terminal supports the store-and-forward communication with the second terminal, and
in which the identifier of the first terminal is included in a third message sent by the first terminal to the first network element via the access network device.

According to a fifth aspect of embodiments of the present disclosure, there is provided a relay communication method, performed by a core network device, including:
receiving a first message sent by a first terminal via an access network device, in which the first message includes an identifier of a second terminal, the identifier of the second terminal is used to retrieve a subscription corresponding to the second terminal from subscriptions stored in the core network device, and the subscription corresponding to the second terminal is used to indicate that the second terminal supports a store-and-forward communication with the first terminal.

In the above-described embodiment, a network may authorize the store-and-forward communication between the first terminal and the second terminal. In this way, in a case where there is no end-to-end connection between the first terminal and the network, communication with the network may be performed via the relay second terminal; further the relay second terminal supports the store-and-forward communication with the first terminal, such that the communication between the first terminal and the network may be performed successfully in a case where the connection between the relay second terminal and the network is available or unavailable, thereby effectively improving the communication efficiency of the system and improving the coverage of the network.

In connection with some embodiments of the fifth aspect, in some embodiments, the method further includes:
sending a second message to the first terminal via the access network device, in which the second message is sent by the first terminal to the second terminal, and the second message is used to indicate that the store-and-forward communication between the second terminal and the first terminal is authorized.

In connection with some embodiments of the fifth aspect, in some embodiments, the method further includes:
receiving a third message sent by the first terminal via the access network device, in which the third message includes an identifier of the first terminal, the identifier of the first terminal is used to retrieve a subscription corresponding to the first terminal from the subscriptions stored in the core network device, and the subscription corresponding to the first terminal is used to indicate that the first terminal supports the store-and-forward communication with the second terminal; and
sending a fourth message to the first terminal via the access network device, in which the fourth message is sent by the first terminal to the second terminal, and the fourth message is used to indicate that the store-and-forward communication between the first terminal and the second terminal is authorized.

According to a sixth aspect of embodiments of the present disclosure, there is provided a relay communication method, including:
sending, by a first network element, a sixth message to a second network element, in which the sixth message includes an identifier of a second terminal; and
retrieving, by the second network element, according to the identifier of the second terminal, a subscription corresponding to the second terminal from stored subscriptions, in which the subscription corresponding to the second terminal is used to indicate that the second terminal supports a store-and-forward communication with a first terminal, and
in which the identifier of the second terminal is included in a first message sent by the first terminal to the first network element via an access network device.

In the above-described embodiment, a network may authorize the store-and-forward communication between the first terminal and the second terminal. In this way, in a case where there is no end-to-end connection between the first terminal and the network, communication with the network may be performed via the relay second terminal; further the relay second terminal supports the store-and-forward communication with the first terminal, such that the communication between the first terminal and the network may be performed successfully in a case where the connection between the relay second terminal and the network is available or unavailable, thereby effectively improving the communication efficiency of the system and improving the coverage of the network.

In connection with some embodiments of the sixth aspect, in some embodiments, the method further includes:
sending, by the first network element, a seventh message to the second network element, in which the seventh message includes an identifier of the first terminal; and
retrieving, by the second network element, according to the identifier of the first terminal, a subscription corresponding to the first terminal from the stored subscriptions, in which the subscription corresponding to the first terminal is used to indicate that the first terminal supports the store-and-forward communication with the second terminal, and
in which the identifier of the first terminal is included in a third message sent by the first terminal to the first network element via the access network device.

According to a seventh aspect of embodiments of the present disclosure, there is provided a relay communication method, including:
sending, by a second terminal, a first message to a first terminal, in which the first message includes an identifier of the second terminal;
sending, by the first terminal, the first message to a first network element via an access network device;
sending, by the first network element, a sixth message to a second network element, in which the sixth message includes the identifier of the second terminal; and
retrieving, by the second network element, according to the identifier of the second terminal, a subscription corresponding to the second terminal from stored subscriptions, in which the subscription corresponding to the second terminal is used to indicate that the second terminal supports a store-and-forward communication with the first terminal.

In the above-described embodiment, in a case where there is no end-to-end connection between the first terminal and a network, communication with the network may be performed via the relay second terminal; further the relay second terminal supports the store-and-forward communication with the first terminal, such that the communication between the first terminal and the network may be performed successfully in a case where the connection between the relay second terminal and the network is available or unavailable, thereby effectively improving the communication efficiency of the system and improving the coverage of the network.

In connection with some embodiments of the seventh aspect, in some embodiments, the method further includes:
sending, by the first network element, a second message to the first terminal via the access network device, in which the second message is used to indicate that the store-and-forward communication between the second terminal and the first terminal is authorized; and
sending, by the first terminal, the second message to the second terminal.

In connection with some embodiments of the seventh aspect, in some embodiments, the method further includes:
sending, by the first terminal, a third message to the first network element via the access network device, in which the third message includes an identifier of the first terminal;
sending a seventh message to the second network element, in which the seventh message includes the identifier of the first terminal;
retrieving, by the second network element, according to the identifier of the first terminal, a subscription corresponding to the first terminal from the stored subscriptions, in which the subscription corresponding to the first terminal is used to indicate that the first terminal supports the store-and-forward communication with the second terminal; and
sending, by the first network element, a fourth message to the first terminal via the access network device, in which the fourth message is used to indicate that the store-and-forward communication between the first terminal and the second terminal is authorized.

In connection with some embodiments of the seventh aspect, in some embodiments, the method further includes:
sending, by the first terminal, a fifth message to the second terminal, in which the fifth message is used to instruct the second terminal to perform the store-and-forward communication with the first terminal.

In connection with some embodiments of the seventh aspect, in some embodiments, the method further includes:
in a case where a connection between the first terminal and the access network device is not available, sending, by the second terminal, information to the first terminal, and storing, by the first terminal, the information sent by the second terminal.

In connection with some embodiments of the seventh aspect, in some embodiments, the method further includes:
in a case where a connection between the first terminal and the access network device is available, sending, by the first terminal, information sent by the second terminal and stored by the first terminal to the access network device; and/or
sending, by the second terminal, information to the first terminal, and forwarding, by the first terminal, the information sent by the second terminal to the access network device.

According to an eighth aspect of embodiments of the present disclosure, there is provided a first terminal, including at least one of a transceiver module or a processing module, in which the first terminal is used to perform the first aspect and optional implementations of the first aspect.

According to a ninth aspect of embodiments of the present disclosure, there is provided a second terminal, including at least one of a transceiver module or a processing module, in which the second terminal is used to perform the second aspect and optional implementations of the second aspect.

According to a tenth aspect of embodiments of the present disclosure, there is provided a first network element, including at least one of a transceiver module or a processing module, in which the first network element is used to perform the third aspect and optional implementations of the third aspect.

According to an eleventh aspect of embodiments of the present disclosure, there is provided a second network element, including at least one of a transceiver module or a processing module, in which the second network element is used to perform the fourth aspect and optional implementations of the fourth aspect.

According to a twelfth aspect of embodiments of the present disclosure, there is provided a core network device, including at least one of a transceiver module or a processing module, in which the core network device is used to perform the fifth aspect and optional implementations of the fifth aspect.

According to a thirteenth aspect of embodiments of the present disclosure, there is provided a first terminal, including one or more processors, in which the first terminal is used to perform the first aspect and optional implementations of the first aspect.

According to a fourteenth aspect of embodiments of the present disclosure, there is provided a second terminal, including one or more processors, in which the second terminal is used to perform the second aspect and optional implementations of the second aspect.

According to a fifteenth aspect of embodiments of the present disclosure, there is provided a first network element, including one or more processors, in which the first network element is used to perform the third aspect and optional implementations of the third aspect.

According to a sixteenth aspect of embodiments of the present disclosure, there is provided a second network element, including one or more processors, in which the second network element is used to perform the fourth aspect and optional implementations of the fourth aspect.

According to a seventeenth aspect of embodiments of the present disclosure, there is provided a core network device, including one or more processors, in which the core network device is used to perform the fifth aspect and optional implementations of the fifth aspect.

According to an eighteenth aspect of embodiments of the present disclosure, there is provided a communication system, including: a first terminal, a second terminal, and a core network device, in which the first terminal is configured to perform the method described in the first aspect and optional implementations of the first aspect, the second terminal is configured to perform the method described in the second aspect and optional implementations of the second aspect, and the core network device is configured to perform the method described in the third aspect, the fourth aspect, and the fifth aspect, and optional implementations of the third aspect, the fourth aspect, and the fifth aspect.

According to a nineteenth aspect of embodiments of the present disclosure, there is provided a storage medium having stored therein instructions that, when executed on a communication device, cause the communication device to perform the method described in the first to fifth aspects and optional implementations of the first to fifth aspects.

According to a twentieth aspect of embodiments of the present disclosure, there is provided a program product that, when executed by a communication device, causes the communication device to perform the method described in the first to fifth aspects and optional implementations of the first to fifth aspects.

According to a twenty-first aspect of embodiments of the present disclosure, there is provided a computer program that, when run on a computer, causes the computer to perform the method described in the first to fifth aspects and optional implementations of the first to fifth aspects.

According to a twenty-second aspect of embodiments of the present disclosure, there is provided a chip or chip system. The chip or chip system includes a processing circuit configured to perform the method described in the first to fifth aspects and optional implementations of the first to fifth aspects.

It may be understood that the above-described first terminal, second terminal, first network element, second network element, core network device, communication device, communication system, storage medium, program product, and computer program are all used to perform the method proposed in embodiments of the present disclosure. Therefore, for the beneficial effects that may be achieved, reference may be made to the beneficial effects in the corresponding methods, which is not repeated here.

The present disclosure provides a relay communication method and a relay communication apparatus, a communication device, a communication system and a storage medium. In some embodiments, terms such as the relay communication method, the information processing method and the communication method may be replaced with each other, terms such as the relay communication apparatus, the information processing apparatus and the communication apparatus may be replaced with each other, and terms such as the information processing system and the communication system may be replaced with each other.

Embodiments of the present disclosure are not exhaustive, but are merely illustrative of some embodiments, and are not intended to be a specific limitation on the scope of protection of the present disclosure. In the absence of contradictions, each step in a certain embodiment may be implemented as an independent embodiment, and the steps may be arbitrarily combined, for example, a solution in which some steps are removed in a certain embodiment may also be implemented as an independent embodiment, and the order of each step in a certain embodiment may be arbitrarily exchanged, and further, optional implementations in a certain embodiment may be arbitrarily combined. Furthermore, various embodiments may be arbitrarily combined, for example, some or all steps of different embodiments may be arbitrarily combined, and a certain embodiment may be arbitrarily combined with optional implementations of other embodiments.

In each embodiment of the present disclosure, if there is no special description and logical conflict, the terms and/or descriptions among the embodiments are consistent and may be referenced to each other, and technical features in different embodiments may be combined to form new embodiments according to their intrinsic logical relationships.

The terms used in embodiments of the present disclosure is for the purpose of describing specific embodiments only, and is not intended to limit the present disclosure.

In embodiments of the present disclosure, unless otherwise specified, elements represented in the singular form, such as "a", "an", "the", "above", "said", "preceding", "this", and the like, may represent "one and only one", or may represent "one or more", "at least one", and the like. For example, in a case where an article such as "a", "an", and "the", in English is used in translation, a noun after the article may be understood as a singular expression or a plural expression.

In embodiments of the present disclosure, "multiple" refers to two or more.

In some embodiments, terms such as "at least one of", "one or more", "a plurality of", "multiple", may be replaced with each other.

In some embodiments, descriptions such as "at least one of A and B", "A and/or B", "A in one case and B in another", "in response to one case A and in response to another case B" may include the following technical solutions depending on the situation: in some embodiments A (A is executed regardless of B); in some embodiments B (B is executed regardless of A); in some embodiments, execution is selected from A and B (A and B are selectively executed); in some embodiments A and B (both A and B are executed). The same applies when there are more branches such as A, B, and C.

In some embodiments, descriptions such as "A or B" may include the following technical solutions depending on the situation: in some embodiments, A (A is executed regardless of B); in some embodiments, B (B is executed regardless of A); in some embodiments, execution is selected from A and B (A and B are selectively executed). The same applies when there are more branches such as A, B, and C.

The prefix words such as "first" and "second" in embodiments of the present disclosure are only for distinguishing different description objects, and do not constitute restrictions on the position, order, priority, quantity, content, etc. of the description objects. For statements of the description objects, please refer to the description of the context in the claims or the embodiments, and should not constitute unnecessary restrictions due to the use of the prefix words. For example, if the description object is a "field", the ordinal number before the "field" in the "first field" and the "second field" does not limit the position or order between the "fields", and "first" and "second" do not limit whether the "fields" modified by them are in the same message, nor do they limit the order of the "first field" and the "second field". For another example, if the description object is "rank", the ordinal number before "rank" in "first rank" and "second rank" does not limit the priority between "rank". For another example, the number of description objects is not limited by ordinal numbers, and may be one or more. Taking "first device" as an example, the number of "devices" may be one or more. Furthermore, objects modified by different prefixes may be the same or different, for example, if the description object is the "device", the "first device" and the "second device" may be the same device or different devices, and the types thereof may be the same or different. For another example, when the description object is "information", the "first information" and the "second information" may be the same information or different information, and the contents thereof may be the same or different.

In some embodiments, terms such as "including A", "containing A", "for indicating A", "carrying A", may be interpreted as directly carrying A, or may be interpreted as indirectly indicating A.

In some embodiments, terms such as "in response to", "in response to determining", "in a case where", "when", "upon", "if", and the like may be replaced with each other.

In some embodiments, terms such as "greater than", "greater than or equal to", "not smaller than", "more than", "more than or equal to", "not lower than", "higher", "higher than or equal to", "not less than", "above" and the like may be replaced with each other, and terms such as "smaller than", "smaller than or equal to", "not greater than", "less than", "less than or equal to", "not more than", "lower than", "lower than or equal to", "not higher than", "below" and the like may be replaced with each other.

In some embodiments, the apparatus and the device may be interpreted as physical or virtual, and the names thereof are not limited to those described in embodiments, and may be understood as "equipment", "device", "circuit", "network element", "node", "function", "unit", "section", "system", "network", "chip", "chip system", "entity", "body", and the like in some situations.

In some embodiments, the "network" may be interpreted as an apparatus included in the network, for example, an access network device, a core network device, or the like.

In some embodiments, the "access network device (AN device)" may also be referred to as "a radio access network device (RAN device)", "a base station (BS)", "a radio base station", "a fixed station", may also be understood in some embodiments as "a node", "an access point", "a transmission point (TP)", "a reception point (RP)", "a transmission/reception point (TRP)", "a panel", "an antenna panel", "an antenna array", "a cell", "a macro cell", "a small cell", "a femto cell", "a pico cell", "a sector", "a cell group", "a serving cell", "a carrier", "a component carrier", "a bandwidth part (BWP)", etc.

In some embodiments, "a terminal" or "a terminal device" may be referred to as "a user equipment (UE)", "a user terminal", "a mobile station (MS)", "a mobile terminal (MT)", a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client and the like.

In some embodiments, obtaining data, information and the like may comply with laws and regulations of the country where it is located.

In some embodiments, data, information and the like may be obtained after obtaining the user's consent.

Further, each element, each row, or each column in the table of embodiments of the present disclosure may be implemented as an independent embodiment, and any combination of any element, any row, or any column may also be implemented as an independent embodiment.

In order to better understand a relay communication method disclosed in embodiments of the present disclosure, the following will first describe a communication system to which embodiments of the present disclosure are applicable.

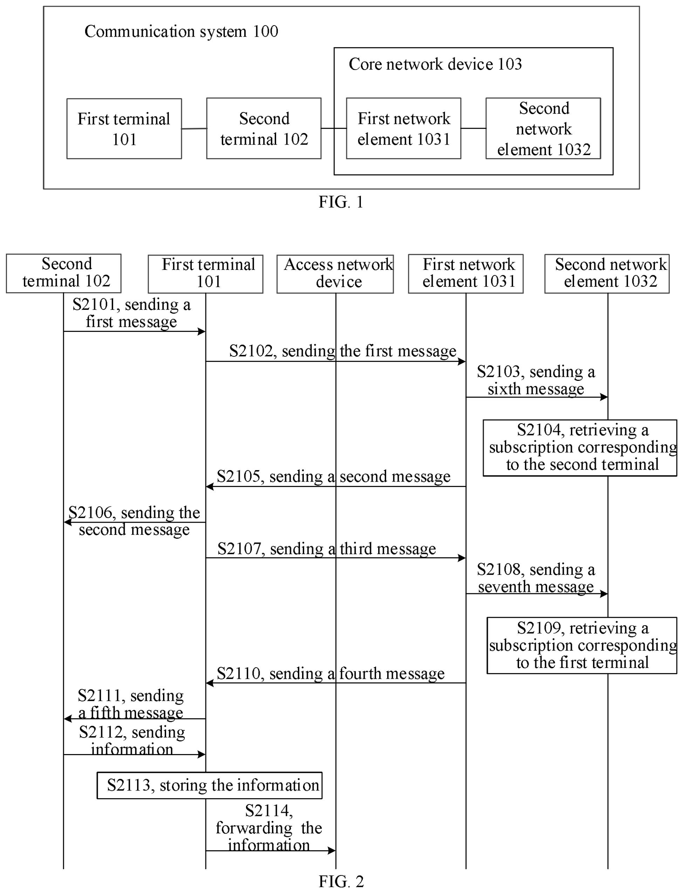

FIG. 1 is a schematic diagram illustrating an architecture of a communication system according to embodiments of the present disclosure.

As shown in FIG. 1, the communication system 100 includes a terminal 101, a network device 102 and a core network device 103.

In some embodiments, the terminal 101 includes, for example, at least one of a mobile phone, a wearable device, an Internet of Things device, an automobile with a communication function, a smart car, a pad, a computer with a wireless transmission and reception function, a virtual reality (VR) terminal device, an augmented reality (AR) terminal device, a wireless terminal device in industrial control, a wireless terminal device in self-driving, a wireless terminal device in remote medical surgery, a wireless terminal device in smart grid, a wireless terminal device in transportation safety, a wireless terminal device in smart city, and a wireless terminal device in smart home, which is not limited in the present disclosure.

In some embodiments, the second terminal 102 is, for example, an Ambient power-enabled Internet of Things (A-IoT) device or an A-IoT tag, powered by an environmental energy source, such as energy from solar, light, motion/vibration, heat, pressure, or any other power source. The second terminal may be battery-free or have limited power storage capability, may use energy harvested from radio waves or use any other form of energy that may be harvested under a particular situation.

In some embodiments, the communication system 100 further includes an access network device. The access network device is, for example, a node or device that accesses a terminal to a wireless network, and the access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a radio backhaul device, a radio network controller (RNC), a base station controller (BSC), a base transceiver station (BTS), a base band unit (BBU), a mobile switching center, a base station in a 6G communication system, an open base station (RAN), a cloud base station (Cloud RAN), a base station in another communication system, and an access node in a wireless fidelity (WiFi) system, which is not limited in the present disclosure.

In some embodiments, the technical solution of the present disclosure may be applied to an Open RAN architecture. Moreover, an interface between or within the access network device according to embodiments of the present disclosure may be changed to an internal interface of an Open RAN, and the flow and information interaction between the internal interfaces may be implemented by software or a program.

In some embodiments, the access network device may be composed of a central unit (CU) and a distributed unit (DU), in which the CU may also be referred to as a control unit, and the protocol layer of the access network device may be separated by adopting the structure of the CU-DU, some functions of the protocol layer are centrally controlled by the CU, and some or all functions of the remaining protocol layer are distributed in the DU, and the DU is centrally controlled by the CU, but is not limited to this.

In some embodiments, the core network device 103 may be one device including a first network element 1031, a second network element 1032 and the like, or may be multiple devices or groups of devices including all or part of the above first network element 1031, second network element 1032 and the like, respectively. The network element may be virtual or physical. The core network includes, for example, at least one of an evolved packet core (EPC), a 5G core network (5GCN), and a next generation core (NGC).

In some embodiments, the first network element 1031 is, for example, an access and mobility management function (AMF).

In some embodiments, the first network element 1031 is used for mobility management of the terminal, capable of authorizing and authenticating access of the terminal and the like, and the name is not limited to this.

In some embodiments, the second network element 1032 is, for example, a unified data management (UDM) or a user data repository (UDR).

In some embodiments, the second network element 1032 is used to calculate and store data of the user, and the name is not limited to this.

In some embodiments, the core network device 103 may further include a third network element, for example, a user plane function (UPF).

In some embodiments, the third network element is used for packet routing and forwarding, policy enforcement, traffic reporting, QoS processing and the like, and the name is not limited to this.

It may be understood that the communication system described in embodiments of the present disclosure is to more clearly explain the technical solution of embodiments of the present disclosure, and does not constitute a limitation on the technical solution provided by embodiments of the present disclosure. As those skilled in the art know, with the evolution of the system architecture and the emergence of new business scenarios, the technical solution provided by embodiments of the present disclosure is applicable to similar technical problems.

The following embodiments of the present disclosure may be applied to the communication system 100 illustrated in FIG. 1 or a part of the body, which is not limited in embodiments of the present disclosure. Each body shown in FIG. 1 is an example, and the communication system may include all or some of the bodies shown in FIG. 1, or other bodies other than those shown in FIG. 1, the number and form of the bodies are arbitrary, the connection relationship between the bodies is an example, and the bodies may not be connected or connected, and the connection may be any form, including direct connection or indirect connection, wired connection or wireless connection.

Embodiment of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), and IEEE 802.20, ultrawideband (UWB), Bluetooth (registered trademark), public land mobile network (PLMN) networks, device-to-device (D2D) systems, machine-to-machine (M2M) systems, Internet of Things (IoT) systems, vehicle-to-everything (V2X) systems, systems utilizing other communication methods, and next-generation systems built upon them and the like. Moreover, multiple systems may be combined (e.g., a combination of LTE or LTE-A with 5G) for application.

In embodiments of the present disclosure, the A-IoT device may be battery-less or have limited power storage capability (e.g., using a capacitor). Optionally, the A-IoT device may perform communication without a conventional power source, and/or charge or replace the battery without human intervention. The device itself is capable of using energy harvested from radio waves, or using any other form of energy that may be harvested in a particular situation. Since the A-IoT device does not need a conventional battery, it is also friendly to the environments.

For example, in some embodiments, the A-IoT device may harvest energy from radio waves, where the radio waves may come from 5G NR network entities or user equipment. In some embodiments, the A-IoT device may harvest energy from energy sources such as solar, light, motion/vibration, heat, pressure, or any other power sources.

In some embodiments, some of the potential challenges for the A-IoT device include the following.

Firstly, the A-IoT device is expected to harvest energy and at the same time, uses the harvested energy to support communication.

Secondly, although the A-IoT device has constraints such as complexity, size, power consumption, it needs to have capability to provide sufficient communication services to fulfill the corresponding requirements.

In some embodiments, the user may use a handheld device to trigger the A-IoT device on the box to send its ID to the network. Optionally, if the A-IoT device is within coverage of the network, the A-IoT device may communicate directly with the network, otherwise the handheld device may relay the communication.

In some embodiments, if the handheld device is not connected to the network either, communication between the A-IoT device and the network will fail. In this case, if it is supported that the A-IoT device may still send messages to the handheld device, the handheld device may forward these messages to the network when it is connected to the network, which will greatly improve the communication efficiency of the system.

Therefore, in a case where there is no end-to-end connection between the A-IoT device and the network, how to support the store-and-forward communication from the A-IoT device to the network via another terminal is an urgent problem to be solved.

In embodiments of the present disclosure, it is assumed that the first terminal and the second terminal (the A-IoT device) are authorized by the operator to communicate with each other.

FIG. 2 is an interactive schematic diagram illustrating a relay communication method according to an embodiment of the present disclosure. As shown in FIG. 2, the method according to an embodiment of the present disclosure is applied to a communication system 100, and includes the following steps.

**In step S2101,** a second terminal sends a first message to a first terminal.

In some embodiments, the first terminal receives the first message sent by the second terminal.

In some embodiments, the first message includes an identifier of the second terminal.

In some embodiments, the identifier of the second terminal may be at least one of a subscription concealed identifier (SUCI), a 5G globally unique temporary identity (5G-GUTI), or a permanent equipment identifier (PEI).

In some embodiments, the identifier of the second terminal is used to retrieve a subscription corresponding to the second terminal from subscriptions stored in a second network element.

In some embodiments, the first message may further include other parameters for registration, such as at least one of a registration type or a security parameter.

In some embodiments, the first message is used to request access of the second terminal into the network.

In some embodiments, the first message is used to request registration of the second terminal in the network.

In some embodiments, the name of the first message is not limited, which may be, for example, "access request", "registration request", "connection request" or the like.

In some embodiments, the second terminal may collect energy before sending the first message to obtain sufficient energy to support the second terminal to send the first message, for example, the second terminal may obtain energy from radio waves sent by the first terminal to the second terminal.

In some embodiments, the first terminal may send radio energy to the second terminal before the second terminal sends the first message to the first terminal.

In some embodiments, the first terminal may send a signaling to the second terminal before the second terminal sends the first message to the first terminal, and the signaling is used to indicate activation of the second terminal.

**In step S2102,** the first terminal sends the first message to a first network element via an access network device.

In some embodiments, the first network element receives the first message sent by the first terminal via the access network device.

In various embodiments of the present disclosure, the access network device is configured to transparently transmit messages exchanged between the first terminal and a core network device.

In some embodiments, the first message includes the identifier of the second terminal.

In some embodiments, the identifier of the second terminal may be at least one of the SUCI, the 5G-GUTI, or the PEI.

In some embodiments, the identifier of the second terminal is used to retrieve the subscription corresponding to the second terminal from the subscriptions stored in the second network element.

In some embodiments, the first message may further include other parameters for registration.

In some embodiments, the first message is used to request the access of the second terminal into the network.

In some embodiments, the first message is used to request the registration of the second terminal in the network.

In some embodiments, the name of the first message is not limited, which may be, for example, "access request", "registration request", "connection request" or the like.

In some embodiments, the first message may be included in an uplink (UL) non access stratum (NAS) transport message sent by the first terminal to the first network element via the access network device.

In some embodiments, the first message may be included in an NAS container.

**In step S2103,** the first network element sends a sixth message to the second network element.

In some embodiments, the second network element receives the sixth message sent by the first network element.

In some embodiments, the sixth message includes the identifier of the second terminal received by the first network element.

In some embodiments, the sixth message is used to request retrieving of the subscription corresponding to the second terminal from the subscriptions stored in the second network element.

In some embodiments, the sixth message is used to request download of the subscription corresponding to the second terminal.

In some embodiments, the subscription corresponding to the second terminal is used to indicate that the second terminal supports a store-and-forward communication with the first terminal.

In some embodiments, the subscription corresponding to the second terminal includes "A-IoT store-and-forward communication allowed".

In some embodiments, the name of the sixth message is not limited, which may be, for example, "retrieval request", "user data acquisition request", "subscription retrieval request" or the like.

In some embodiments, the sixth message may be a "Nudm _ SDM _ Get request".

**In step S2104,** the second network element retrieves the subscription corresponding to the second terminal.

In some embodiments, the second network element retrieves the subscription corresponding to the second terminal from the stored subscriptions according to the identifier of the second terminal in the received sixth message.

In some embodiments, the second network element may be a UDM or a UDR.

In some embodiments, the subscription corresponding to the second terminal may be first retrieved from subscriptions stored in the UDM.

In some embodiments, if the subscription corresponding to the second terminal is not retrieved from the subscriptions stored in the UDM, the subscription corresponding to the second terminal may be retrieved from the subscriptions stored in the UDR according to the identifier of the second terminal.

In some embodiments, the subscription corresponding to the second terminal is used to indicate that the second terminal supports the store-and-forward communication with the first terminal.

In some embodiments, the subscription corresponding to the second terminal includes "A-IoT store-and-forward communication allowed".

In some embodiments, after retrieving the subscription corresponding to the second terminal, the second network element may send a response message of the sixth message to the first network element, and the response message of the sixth message is used to indicate to the first network element that the second terminal supports the store-and-forward communication with the first terminal.

In some embodiments, the name of the response message of the sixth message is not limited, which may be, for example, "retrieval response", "user data acquisition response", "subscription retrieval response" or the like.

In some embodiments, the response message of the sixth message may be a "Nudm _ SDM _ Get response".

**In step S2105,** the first network element sends a second message to the first terminal via the access network device.

In some embodiments, the first terminal receives the second message sent by the first network element via the access network device.

In some embodiments, the second message is used to indicate that the store-and-forward communication between the second terminal and the first terminal is authorized

In some embodiments, the name of the second message is not limited, which may be, for example, "access response", "registration accept", "connection response" or the like.

In some embodiments, the second message may be included in a downlink (DL) NAS transport message sent by the first network element to the first terminal via the access network device.

**In step S2106,** the first terminal sends the second message to the second terminal.

In some embodiments, the second terminal receives the second message forwarded by the first terminal.

In some embodiments, the second message is used to indicate that the store-and-forward communication between the second terminal and the first terminal is authorized

In some embodiments, the name of the second message is not limited, which may be, for example, "access response", "registration accept", "connection response" or the like.

In some embodiments, after receiving the second message, the second terminal may initiate a user plane connection from the second terminal to the network and an application, which may be a protocol data unit (PDU) session or another type of connection, which is not limited in the present disclosure.

**In step S2107,** the first terminal sends a third message to the first network element via the access network device.

In some embodiments, the first network element receives the third message sent by the first terminal via the access network device.

In some embodiments, the third message includes an identifier of the first terminal.

In some embodiments, the identifier of the first terminal may be at least one of the SUCI, the 5G-GUTI, or the PEI.

In some embodiments, the identifier of the first terminal is used to retrieve a subscription corresponding to the first terminal from the subscriptions stored in the second network element.

In some embodiments, the third message may further include other parameters for registration, such as at least one of a registration type or a security parameter.

In some embodiments, the third message is used to request the access of the first terminal into the network.

In some embodiments, the third message is used to request the registration of the first terminal in the network.

In some embodiments, the name of the first message is not limited, which may be, for example, "access request", "registration request", "connection request" or the like.

In some embodiments, the first message may be included in the UL NAS transport message sent by the first terminal to the first network element via the access network device.

In some embodiments, the first message may be included in an NAS container.

**In step S2108,** the first network element sends a seventh message to the second network element.

In some embodiments, the second network element receives the seventh message sent by the first network element.

In some embodiments, the seventh message includes the identifier of the first terminal received by the first network element.

In some embodiments, the seventh message is used to request retrieving of the subscription corresponding to the first terminal from the subscriptions stored in the second network element.

In some embodiments, the seventh message is used to request download of the subscription corresponding to the first terminal.

In some embodiments, the subscription corresponding to the first terminal is used to indicate that the first terminal supports the store-and-forward communication with the second terminal.

In some embodiments, the subscription corresponding to the first terminal includes "A-IoT store-and-forward communication allowed".

In some embodiments, the name of the seventh message is not limited, which may be, for example, "retrieval request", "user data acquisition request", "subscription retrieval request" or the like.

In some embodiments, the seventh message may be the "Nudm _ SDM _ Get request".

**In step S2109,** the second network element retrieves the subscription corresponding to the first terminal.

In some embodiments, the second network element retrieves the subscription corresponding to the first terminal from the stored subscriptions according to the identifier of the first terminal in the received seventh message.

In some embodiments, the second network element may be the UDM or the UDR.

In some embodiments, the subscription corresponding to the first terminal may be first retrieved from the subscriptions stored in the UDM.

In some embodiments, if the subscription corresponding to the first terminal is not retrieved from the subscriptions stored in the UDM, the subscription corresponding to the first terminal may be retrieved from the subscriptions stored in the UDR according to the identifier of the first terminal.

In some embodiments, the subscription corresponding to the first terminal is used to indicate that the first terminal supports the store-and-forward communication with the second terminal.

In some embodiments, the subscription corresponding to the first terminal includes "A-IoT store-and-forward communication allowed".

In some embodiments, after retrieving the subscription corresponding to the first terminal, the second network element may send a response message of the seventh message to the first network element, and the response message of the seventh message is used to indicate to the first network element that the first terminal supports the store-and-forward communication with the second terminal.

In some embodiments, the name of the response message of the seventh message is not limited, which may be, for example, "retrieval response", "user data acquisition response", "subscription retrieval response" or the like.

In some embodiments, the response message of the seventh message may be the "Nudm _ SDM _ Get response".

**In step S2110,** the first network element sends a fourth message to the first terminal via the access network device.

In some embodiments, the first terminal receives the fourth message sent by the first network element via the access network device.

In some embodiments, the fourth message is used to indicate that the store-and-forward communication between the second terminal and the first terminal is authorized.

In some embodiments, the name of the fourth message is not limited, which may be, for example, "access response", "registration accept", "connection response" or the like.

In some embodiments, the fourth message may be included in the DL NAS transport message sent by the first network element to the first terminal via the access network device.

In some embodiments, the fourth message and the second message may be sent to the first terminal together.

In some embodiments, the fourth message together with the second message may be included in the DL NAS transport message sent by the first network element to the first terminal via the access network device.

In some embodiments, after receiving the fourth message, the first terminal may initiate a PDU session establishment procedure to establish a user plane connection between the first terminal and the UPF.

In some embodiments, after receiving the fourth message, the first terminal may initiate a user plane connection from the first terminal to the network and the application, which may be the PDU session or another type of connection, which is not limited in the present disclosure.

**In step S2111,** the first terminal sends a fifth message to the second terminal.

In some embodiments, the second terminal receives the fifth message sent by the first terminal.

In some embodiments, the fifth message is used to instruct the second terminal to perform the store-and-forward communication with the first terminal.

In some embodiments, the fifth message is used to indicate to the second terminal that the first terminal may perform the store-and-forward communication with the second terminal.

In some embodiments, the name of the fifth message is not limited, which may be, for example, "execution indication", "activation indication" or the like.

In some embodiments, the fifth message may be sent to the second terminal together with the second message.

In some embodiments, the fifth message and the second message may be included in an access response message.

**In step S2112,** the second terminal sends information to the first terminal.

In some embodiments, the first terminal receives the information sent by the second terminal.

In some embodiments, the second terminal sends uplink data to the first terminal.

**In step S2113,** the first terminal stores the information.

In some embodiments, in a case where a connection between the first terminal and the access network device is not available, the first terminal stores the received information sent by the second terminal.

**In step S2114,** the first terminal forwards the information to the access network device.

In some embodiments, in a case where the connection between the first terminal and the access network device is available, the first terminal sends the information sent by the second terminal and stored by the first terminal to the access network device.

In some embodiments, in a case where the connection between the first terminal and the access network device is available, the first terminal directly receives the information sent by the second terminal and forwards the information sent by the second terminal to the access network device.

In some embodiments, the names of information and the like are not limited to the names described in embodiments. Terms such as "information", "message", "signal", "signaling", "report", "configuration", "indication", "instruction", "command", "channel", "parameter", "domain", "field", "symbol", "symbol", "codebook", "codeword", "codepoint", "bit", "data", "program", and "chip" may be used interchangeably.

In some embodiments, terms such as "radio", "wireless", "radio access network (RAN)", "access network (AN)", and "RAN-based" may be used interchangeably.

In some embodiments, terms such as "sending", "transmitting", "reporting", "distributing", "transmitting", "bi-directionally transmitting", and "sending and/or receiving" may be used interchangeably.

In some embodiments, terms such as "certain", "preset", "default", "set", "indicated", "a certain", "any" and "first" may be used interchangeably. Terms such as "certain A", "preset A", "default A", "set A", "indicated A", "a certain A", "any A" and "first A" may be interpreted as A pre-defined in a protocol or the like, or as A obtained through setting, configuration, or indication, or as specific A, a certain A, any A, or first A, but are not limited to this.

The communication method according to the embodiments of the present disclosure may include at least one of step S2101 to step S2114. For example, steps S2101+ S2102 may be implemented as an independent embodiment, step S2103 may be implemented as an independent embodiment, step S2104 may be implemented as an independent embodiment, steps S2105+S2106 may be implemented as an independent embodiment, step S2107 may be implemented as an independent embodiment, step S2108 may be implemented as an independent embodiment, step S2109 may be implemented as an independent embodiment, step S2110 may be implemented as an independent embodiment, step S2111 may be implemented as an independent embodiment, step S2112 may be implemented as an independent embodiment, steps S2111+S2112 may be implemented as an independent embodiment, steps S2111+S2112+S2113+S2114 may be implemented as an independent embodiment, steps S2111+S2114 may be implemented as an independent embodiment, which are not limited herein.

In some embodiments, steps 2102 and 2107 may be performed in an exchanged order or simultaneously, and steps 2105 and 2110 may be performed in an exchanged order or simultaneously.

In some embodiments, steps 2105 to 2114 are optional, and one or more of these steps may be omitted or replaced in different embodiments.

In some embodiments, steps 2107 to 2114 are optional, and one or more of these steps may be omitted or replaced in different embodiments.

In some embodiments, steps 2101 to 2104 and steps 2110 to 2114 are optional, and one or more of these steps may be omitted or replaced in different embodiments.

In some embodiments, steps 2101 to 2106 and steps 2111 to 2114 are optional, and one or more of these steps may be omitted or replaced in different embodiments.

In some embodiments, steps 2101 to 2111 are optional, and one or more of these steps may be omitted or replaced in different embodiments.

In some embodiments, reference may be made to other optional implementations described before or after the specification corresponding to FIG. 2.

In this implementation or embodiment, unless there is contradiction, each step may be independent, arbitrarily combined or exchanged in order, optional methods or optional examples may be arbitrarily combined, and may be arbitrarily combined with any steps of other implementations or other embodiments.

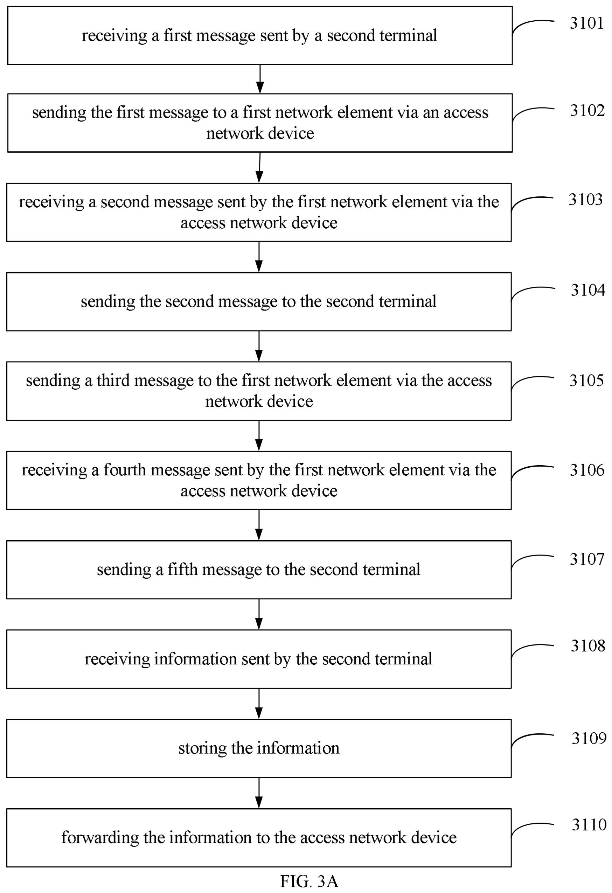

FIG. 3A is a flowchart illustrating a relay communication method according to an embodiment of the present disclosure. As shown in FIG. 3A, an embodiment of the present disclosure relates to a relay communication method performed by a first terminal, and the method includes the following steps.

**In step S3101,** a first message sent by a second terminal is received.

Regarding an optional implementation of step S3101, reference may be made to the optional implementation of step S2101 in FIG. 2 and other related parts of the embodiment involved in FIG. 2, which is not repeated here.

In some embodiments, step S3101 is omitted, and the first terminal 101 autonomously implements the function indicated by the first information, or the above function is default or preset.

**In step S3102,** the first message is sent to a first network element via an access network device.

Regarding an optional implementation of step S3102, reference may be made to the optional implementation of step S2102 in FIG. 2 and other related parts of the embodiment involved in FIG. 2, which is not repeated here.

Optionally, the first message is used for the first network element 1031 to send a sixth message to a second network element 1032. Regarding its optional implementation, reference may be made to the optional implementation of step S2103 in FIG. 2 and other related parts of the embodiment involved in FIG. 2, which is not repeated here.

Optionally, an identifier of the second terminal in the first message is used for the second network element 1032 to retrieve a subscription corresponding to the second terminal. Regarding its optional implementation, reference may be made to the optional implementation of step S2104 in FIG. 2 and other related parts of the embodiment involved in FIG. 2, which is not repeated here.

**In step S3103,** a second message sent by the first network element via the access network device is received.

Regarding an optional implementation of step S3103, reference may be made to the optional implementation of step S2105 in FIG. 2 and other related parts of the embodiment involved in FIG. 2, which is not repeated here.

**In step S3104,** the second message is sent to the second terminal.

Regarding an optional implementation of step S3104, reference may be made to the optional implementation of step S2106 in FIG. 2 and other related parts of the embodiment involved in FIG. 2, which is not repeated here.

**In step S3105,** a third message is sent to the first network element via the access network device.

Regarding an optional implementation of step S3105, reference may be made to the optional implementation of step S2107 in FIG. 2 and other related parts of the embodiment involved in FIG. 2, which is not repeated here.

Optionally, the third message is used for the first network element 1031 to send a seventh message to the second network element 1032. Regarding its optional implementation, reference may be made to the optional implementation of step S2108 in FIG. 2 and other related parts of the embodiment involved in FIG. 2, which is not repeated here.

Optionally, an identifier of the first terminal in the third message is used for the second network element 1032 to retrieve a subscription corresponding to the first terminal. Regarding its optional implementation, reference may be made to the optional implementation of step S2109 in FIG. 2 and other related parts of the embodiment involved in FIG. 2, which is not repeated here.

**In step S3106,** a fourth message sent by the first network element via the access network device is received.

Regarding an optional implementation of step S3106, reference may be made to the optional implementation of step S2110 in FIG. 2 and other related parts of the embodiment involved in FIG. 2, which is not repeated here.

**In step S3107,** a fifth message is sent to the second terminal.

Regarding an optional implementation of step S3107, reference may be made to the optional implementation of step S2111 in FIG. 2 and other related parts of the embodiment involved in FIG. 2, which is not repeated here.

**In step S3108,** information sent by the second terminal is received.

Regarding an optional implementation of step S3108, reference may be made to the optional implementation of step S2112 in FIG. 2 and other related parts of the embodiment involved in FIG. 2, which is not repeated here.

**In step S3109,** the information is stored.

Regarding an optional implementation of step S3109, reference may be made to the optional implementation of step S2113 in FIG. 2 and other related parts of the embodiment involved in FIG. 2, which is not repeated here.

**In step S3110,** the information is forwarded to the access network device.

Regarding an optional implementation of step S3110, reference may be made to the optional implementation of step S2114 in FIG. 2 and other related parts of the embodiment involved in FIG. 2, which is not repeated here.

The communication method according to the embodiments of the present disclosure may include at least one of step S3101 to step S3110. For example, steps S3101+S3102 may be implemented as an independent embodiment, steps S3101+S3102+S3103+S3104 may be implemented as an independent embodiment, step S3105 may be implemented as an independent embodiment, steps S3105+S3106 may be implemented as an independent embodiment, step S3107 may be implemented as an independent embodiment, step S3108 may be implemented as an independent embodiment, step S3106 may be implemented as an independent embodiment, step S3107 may be implemented as an independent embodiment, step S3108 may be implemented as an independent embodiment, steps S3107+S3108 may be implemented as an independent embodiment, steps S3108+S3109+S3110 may be implemented as an independent embodiment, steps S3108+S3110 may be implemented as an independent embodiment, which are not limited herein.

In some embodiments, steps 3102 and 3105 may be performed in an exchanged order or simultaneously, and steps 3103 and 3106 may be performed in an exchanged order or simultaneously.

In some embodiments, step 3107 is optional, and one or more of these steps may be omitted or replaced in different embodiments.

In some embodiments, steps 3103 to 3110 are optional, and one or more of these steps may be omitted or replaced in different embodiments.

In some embodiments, steps 3105 to 3110 are optional, and one or more of these steps may be omitted or replaced in different embodiments.

In some embodiments, steps 3101 to 3102 and steps 3106 to 3110 are optional, and one or more of these steps may be omitted or replaced in different embodiments.

In some embodiments, steps 3101 to 3104 and steps 3107 to 3110 are optional, and one or more of these steps may be omitted or replaced in different embodiments.

In some embodiments, steps 3101 to 3107 are optional, and one or more of these steps may be omitted or replaced in different embodiments.

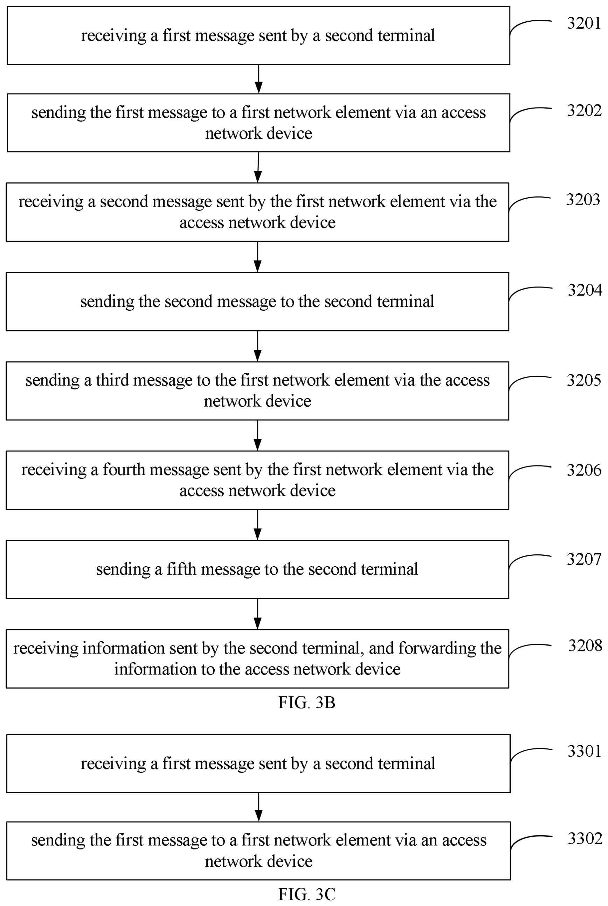

FIG. 3B is a flowchart illustrating a relay communication method according to an embodiment of the present disclosure. As shown in FIG. 3B, an embodiment of the present disclosure relates to a relay communication method, performed by a first terminal, and the method includes the following steps.

**In step S3201,** a first message sent by a second terminal is received.

Regarding an optional implementation of step S3201, reference may be made to the optional implementations of step S2101 in FIG. 2 and step S3101 in FIG. 3A and other related parts of the embodiments involved in FIG. 2 and FIG. 3A, which is not repeated here.

In some embodiments, step S3201 is omitted, and the first terminal 101 autonomously implements the function indicated by the first information, or the above function is default or preset.

**In step S3202,** the first message is sent to a first network element via an access network device.

Regarding an optional implementation of step S3202, reference may be made to the optional implementations of step S2102 in FIG. 2 and step S3102 in FIG. 3A and other related parts of the embodiments involved in FIG. 2 and FIG. 3A, which is not repeated here.

**In step S3203,** a second message sent by the first network element via the access network device is received.

Regarding an optional implementation of step S3203, reference may be made to the optional implementations of step S2105 in FIG. 2 and step S3103 in FIG. 3A and other related parts of the embodiments involved in FIG. 2 and FIG. 3A, which is not repeated here.

**In step S3204,** the second message is sent to the second terminal.

Regarding an optional implementation of step S3204, reference may be made to the optional implementations of step S2106 in FIG. 2 and step S3104 in FIG. 3A and other related parts of the embodiments involved in FIG. 2 and FIG. 3A, which is not repeated here.

**In step S3205,** a third message is sent to the first network element via the access network device.

Regarding an optional implementation of step S3205, reference may be made to the optional implementations of step S2107 in FIG. 2 and step S3105 in FIG. 3A and other related parts of the embodiments involved in FIG. 2 and FIG. 3A, which is not repeated here.

**In step S3206,** a fourth message sent by the first network element via the access network device is received.

Regarding an optional implementation of step S3206, reference may be made to the optional implementations of step S2110 in FIG. 2 and step S3106 in FIG. 3A and other related parts of the embodiments involved in FIG. 2 and FIG. 3A, which is not repeated here.

**In step S3207,** a fifth message is sent to the second terminal.

Regarding an optional implementation of step S3207, reference may be made to the optional implementations of step S2111 in FIG. 2 and step S3107 in FIG. 3A and other related parts of the embodiments involved in FIG. 2 and FIG. 3A, which is not repeated here.

**In step S3208,** information sent by the second terminal is received, and the information is forwarded to the access network device.

Regarding an optional implementation of step S3208, reference may be made to the optional implementations of steps S2112, S2113 and S2114 in FIG. 2 and steps S3108, S3109 and S3110 in FIG. 3A and other related parts of the embodiments involved in FIG. 2 and FIG. 3A, which is not repeated here.

The communication method according to the embodiments of the present disclosure may include at least one of step S3201 to step S3208. For example, steps S3201+S3202 may be implemented as an independent embodiment, steps S3201+S3202+S3203+S3204 may be implemented as an independent embodiment, step S3205 may be implemented as an independent embodiment, steps S3205+S3206 may be implemented as an independent embodiment, step S3207 may be implemented as an independent embodiment, step S3208 may be implemented as an independent embodiment, steps S3207+S3208 may be implemented as an independent embodiment, which are not limited herein.

In some embodiments, steps 3202 and 3205 may be performed in an exchanged order or simultaneously, and steps 3203 and 3206 may be performed in an exchanged order or simultaneously.

In some embodiments, step 3207 is optional, and one or more of these steps may be omitted or replaced in different embodiments.

In some embodiments, steps 3203 to 3208 are optional, and one or more of these steps may be omitted or replaced in different embodiments.

In some embodiments, steps 3205 to 3208 are optional, and one or more of these steps may be omitted or replaced in different embodiments.

In some embodiments, steps 3201 to 3202 and steps 3206 to 3208 are optional, and one or more of these steps may be omitted or replaced in different embodiments.

In some embodiments, steps 3201 to 3204 and steps 3207 to 3208 are optional, and one or more of these steps may be omitted or replaced in different embodiments.

In some embodiments, steps 3201 to 3207 are optional, and one or more of these steps may be omitted or replaced in different embodiments.

FIG. 3C is a flowchart illustrating a relay communication method according to an embodiment of the present disclosure. As shown in FIG. 3C, an embodiment of the present disclosure relates to a relay communication method, performed by a first terminal, and the method includes the following steps.

**In step S3301,** a first message sent by a second terminal is received.

Regarding an optional implementation of step S3301, reference may be made to the optional implementations of step S2101 in FIG. 2, step S3101 in FIG. 3A and step S3201 in FIG. 3B and other related parts of the embodiments involved in FIG. 2, FIG. 3A and FIG. 3B, which is not repeated here.

In some embodiments, step S3201 is omitted, and the first terminal 101 autonomously implements the function indicated by the first information, or the above function is default or preset.

**In step S3302,** the first message is sent to a first network element via an access network device.

Regarding an optional implementation of step S3102, reference may be made to the optional implementations of step S2102 in FIG. 2, step S3102 in FIG. 3A and step S3202 in FIG. 3B and other related parts of the embodiments involved in FIG. 2, FIG. 3A and FIG. 3B, which is not repeated here.

The communication method according to the embodiments of the present disclosure may include at least one of step S3301 to step S3302. For example, step S3301 may be implemented as an independent embodiment, step S3302 may be implemented as an independent embodiment, and steps S3301+S3302 may be implemented as an independent embodiment, which are not limited herein.

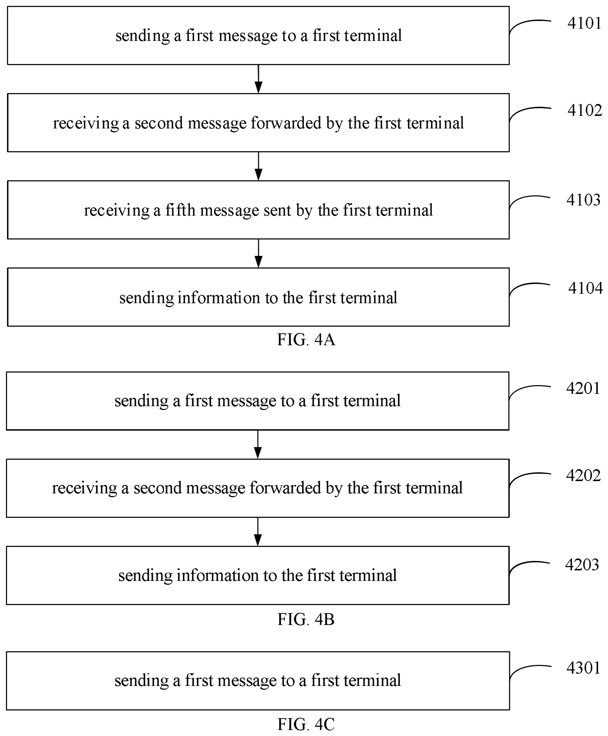

FIG. 4A is a flowchart illustrating a relay communication method according to an embodiment of the present disclosure. As shown in FIG. 4A, the embodiments of the present disclosure relates to a relay communication method, performed by a second terminal, and the method includes the following steps.

**In step S4101,** a first message is sent to a first terminal.

Regarding an optional implementation of step S4101, reference may be made to the optional implementation of step S2101 in FIG. 2 and other related parts of the embodiment involved in FIG. 2, which is not repeated here.

Optionally, the first message is used to be sent by the first terminal 101 to a first network element 1031 via an access network equipment. Regarding its optional implementation, reference may be made to the optional implementation of step S2102 in FIG. 2 and other related parts of the embodiment involved in FIG. 2, which is not repeated here.

Optionally, the first message is used for the first network element 1031 to send a sixth message to a second network element 1032. Regarding its optional implementation, reference may be made to the optional implementation of step S2103 in FIG. 2 and other related parts of the embodiment involved in FIG. 2, which is not repeated here.

Optionally, an identifier of the second terminal in the first message is used for the second network element 1032 to retrieve a subscription corresponding to the second terminal. Regarding its optional implementation, reference may be made to the optional implementation of step S2104 in FIG. 2 and other related parts of the embodiment involved in FIG. 2, which is not repeated here.

**In step S4102,** a second message forwarded by the first terminal is received.

Regarding an optional implementation of step S4102, reference may be made to the optional implementation of step S2106 in FIG. 2 and other related parts of the embodiment involved in FIG. 2, which is not repeated here.

Optionally, the second message is sent by the first network element 1031 to the first terminal 101 via the access network device. Regarding its optional implementation, reference may be made to the optional implementation of step S2105 in FIG. 2 and other related parts of the embodiment involved in FIG. 2, which is not repeated here.

**In step S4103,** a fifth message sent by the first terminal is received.

Regarding an optional implementation of step S4103, reference may be made to the optional implementation of step S2111 in FIG. 2 and other related parts of the embodiment involved in FIG. 2, which is not repeated here.

**In step S4104,** information is sent to the first terminal.

Regarding an optional implementation of step S4104, reference may be made to the optional implementation of step S2112 in FIG. 2 and other related parts of the embodiment involved in FIG. 2, which is not repeated here.

Optionally, the information is used for the first terminal 101 to store the information and/or forward the information to the access network device. Regarding its optional implementation, reference may be made to the optional implementations of step S2113 and step S2114 in FIG. 2 and other related parts of the embodiment involved in FIG. 2, which is not repeated here.

The communication method according to the embodiments of the present disclosure may include at least one of step S4101 to step S4104. For example, step S4101 may be implemented as an independent embodiment, steps S4101+S4102 may be implemented as an independent embodiment, step S4103 may be implemented as an independent embodiment, steps S4103+S4104 may be implemented as an independent embodiment, step S4104 may be implemented as an independent embodiment, and steps S4101+S4102+S4103+S4104 may be implemented as an independent embodiment, which are not limited herein.

In some embodiments, step 4103 is optional, and one or more of these steps may be omitted or replaced in different embodiments.

FIG. 4B is a flowchart illustrating a relay communication method according to an embodiment of the present disclosure. As shown in FIG. 4B, the embodiments of the present disclosure relates to a relay communication method, performed by a second terminal, and the method includes the following steps.

**In step S4201,** a first message is sent to a first terminal.

Regarding an optional implementation of step S4201, reference may be made to the optional implementations of step S2101 in FIG. 2 and step S4101 in FIG. 4A, and other related parts of the embodiments involved in FIG. 2 and FIG. 4A, which is not repeated here.

**In step S4202,** a second message forwarded by the first terminal is received.

Regarding an optional implementation of step S4202, reference may be made to the optional implementations of step S2106 in FIG. 2 and step S4102 in FIG. 4A, and other related parts of the embodiments involved in FIG. 2 and FIG. 4A, which is not repeated here.

**In step S4203,** information is sent to the first terminal.

Regarding an optional implementation of step S4203, reference may be made to the optional implementations of step S2112 in FIG. 2 and step S4104 in FIG. 4A, and other related parts of the embodiments involved in FIG. 2 and FIG. 4A, which is not repeated here.

The communication method according to the embodiments of the present disclosure may include at least one of step S4201 to step S4203. For example, step S4201 may be implemented as an independent embodiment, steps S4201+S4202 may be implemented as an independent embodiment, step S4203 may be implemented as an independent embodiment, and steps S4201+S4202+S4203 may be implemented as an independent embodiment, which are not limited herein.

In some embodiments, step S4203 is optional, and one or more of these steps may be omitted or replaced in different embodiments.

FIG. 4C is a flowchart illustrating a relay communication method according to an embodiment of the present disclosure. As shown in FIG. 4C, an embodiment of the present disclosure relates to a relay communication method, performed by a second terminal, and the method includes the following steps.

**In step S4301,** a first message is sent to a first terminal.

Regarding an optional implementation of step S4301, reference may be made to the optional implementations of step S2101 in FIG. 2, step S4101 in FIG. 4A and step S4201 in FIG. 4B, and other related parts of the embodiments involved in FIG. 2, FIG. 4A and FIG. 4B, which is not repeated here.

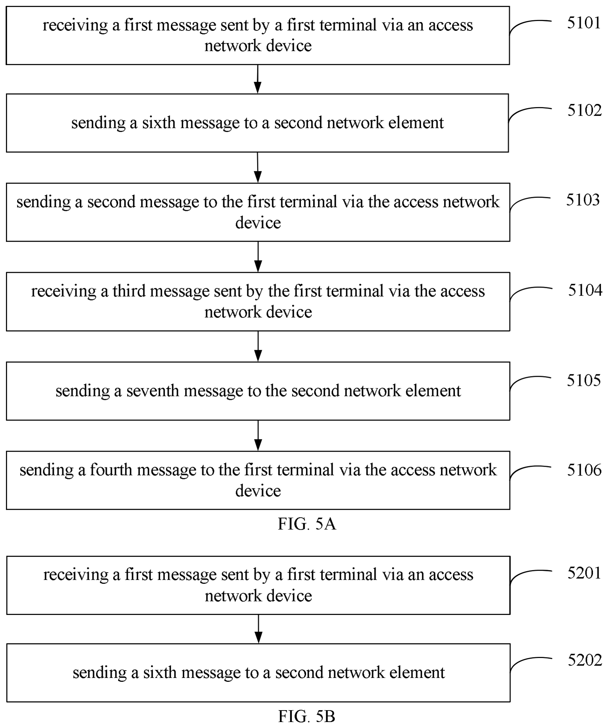

FIG. 5A is a flowchart illustrating a relay communication method according to an embodiment of the present disclosure. As shown in FIG. 5A, an embodiment of the present disclosure relates to a relay communication method, performed by a first network element, and the method includes the following steps.

**In step S5101,** a first message sent by a first terminal via an access network device is received.

Regarding an optional implementation of step S5101, reference may be made to the optional implementation of step S2102 in FIG. 2 and other related parts of the embodiment involved in FIG. 2, which is not repeated here.

Optionally, the first message is sent by a second terminal 102 to the first terminal 101. Regarding its optional implementation, reference may be made to the optional implementation of step S2101 in FIG. 2 and other related parts of the embodiment involved in FIG. 2, which is not repeated here.

**In step S5102,** a sixth message is sent to a second network element.

Regarding an optional implementation of step S5102, reference may be made to the optional implementation of step S2103 in FIG. 2 and other related parts of the embodiment involved in FIG. 2, which is not repeated here.

Optionally, the sixth message is used for the second network element 1032 to retrieve a subscription corresponding to the second terminal. Regarding its optional implementation, reference may be made to the optional implementation of step S2104 in FIG. 2 and other related parts of the embodiment involved in FIG. 2, which is not repeated here.

**In step S5103,** a second message is sent to the first terminal via the access network device.

Regarding an optional implementation of step S5103, reference may be made to the optional implementation of step S2105 in FIG. 2 and other related parts of the embodiment involved in FIG. 2, which is not repeated here.

Optionally, the second message is also used to be sent by the first terminal 101 to the second terminal 102. Regarding its optional implementation, reference may be made to the optional implementation of step S2106 in FIG. 2 and other related parts of the embodiment involved in FIG. 2, which is not repeated here.

**In step S5104,** a third message sent by the first terminal via the access network device is received.

Regarding an optional implementation of step S5104, reference may be made to the optional implementation of step S2107 in FIG. 2 and other related parts of the embodiment involved in FIG. 2, which is not repeated here.

**In step S5105,** a seventh message is sent to the second network element.

Regarding an optional implementation of step S5105, reference may be made to the optional implementation of step S2108 in FIG. 2 and other related parts of the embodiment involved in FIG. 2, which is not repeated here.

Optionally, the seventh message is used for the second network element 1032 to retrieve a subscription corresponding to the first terminal. Regarding its optional implementation, reference may be made to the optional implementation of step S2109 in FIG. 2 and other related parts of the embodiment involved in FIG. 2, which is not repeated here.

**In step S5106,** a fourth message is sent to the first terminal via the access network device.

Regarding an optional implementation of step S5106, reference may be made to the optional implementation of step S2110 in FIG. 2 and other related parts of the embodiment involved in FIG. 2, which is not repeated here.

In some embodiments, the first network element 1031 is, for example, an AMF.

The communication method according to the embodiments of the present disclosure may include at least one of step S5101 to step S5106. For example, steps S5101+S5102+S5103 may be implemented as an independent embodiment, and steps S5104+S5105+S5106 may be implemented as an independent embodiment, which are not limited herein.

In some embodiments, steps 5101 and 5104 may be performed in an exchanged order or simultaneously, steps 5102 and 5105 may be performed in an exchanged order or simultaneously, and steps 5103 and 5106 may be performed in an exchanged order or simultaneously.

In some embodiments, steps 5104 to 5106 are optional, and one or more of these steps may be omitted or replaced in different embodiments.

In some embodiments, steps 5101 to 5103 are optional, and one or more of these steps may be omitted or replaced in different embodiments.

FIG. 5B is a flowchart illustrating a relay communication method according to an embodiment of the present disclosure. As shown in FIG. 5B, an embodiment of the present disclosure relates to a relay communication method, performed by a first network element, and the method includes the following steps.

**In step S5201,** a first message sent by a first terminal via an access network device is received.

Regarding an optional implementation of step S5201, reference may be made to the optional implementations of step S2102 in FIG. 2 and step S5101 in FIG. 5A, and other related parts of the embodiments involved in FIG. 2 and FIG. 5A, which is not repeated here.

**In step S5202,** a sixth message is sent to a second network element.

Regarding an optional implementation of step S5202, reference may be made to the optional implementations of step S2103 in FIG. 2 and step S5102 in FIG. 5A, and other related parts of the embodiments involved in FIG. 2 and FIG. 5A, which is not repeated here.

In some embodiments, the first network element 1031 is, for example, an AMF.

The communication method according to the embodiments of the present disclosure may include at least one of step S5201 to step S5202. For example, step S5201 may be implemented as an independent embodiment, step S5202 may be implemented as an independent embodiment, and steps S5201+S5202 may be implemented as an independent embodiment, which are not limited herein.

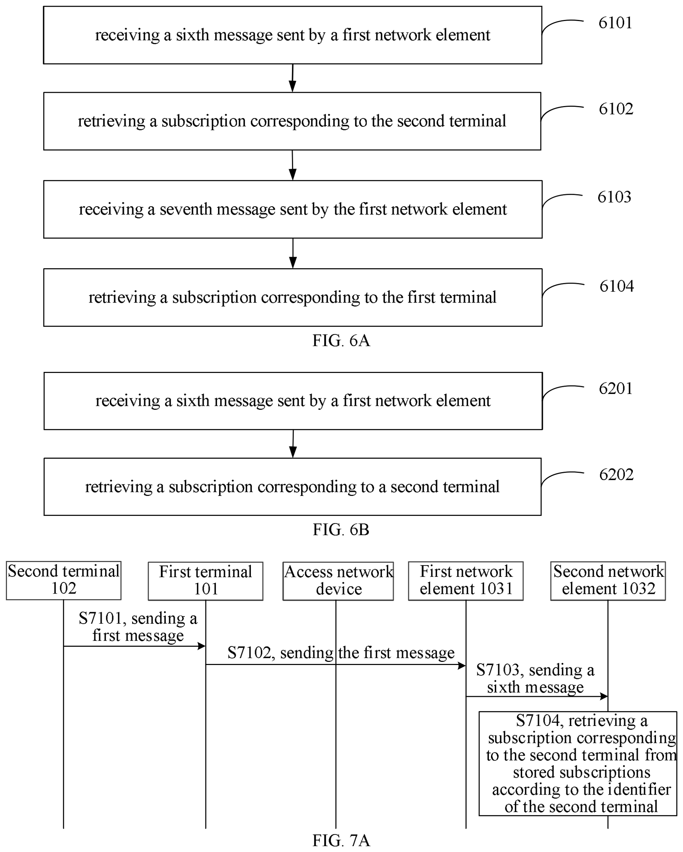

FIG. 6A is a flowchart illustrating a relay communication method according to an embodiment of the present disclosure. As shown in FIG. 6A, an embodiment of the present disclosure relates to a relay communication method, performed by a second network element, and the method includes the following steps.

**In step S6101,** a sixth message sent by a first network element is received.

Regarding an optional implementation of step S6101, reference may be made to the optional implementation of step S2103 in FIG. 2 and other related parts of the embodiment involved in FIG. 2, which is not repeated here.

Optionally, an identifier of a second terminal in the sixth message is included in a first message sent by the first terminal 101 to the first network element 1031 via the access network device. Regarding its optional implementation, reference may be made to the optional implementations of step S2101 and step S2102 in FIG. 2 and other related parts of the embodiment involved in FIG. 2, which is not repeated here.

**In step S6102,** a subscription corresponding to the second terminal is retrieved.

Regarding an optional implementation of step S6102, reference may be made to the optional implementation of step S2104 in FIG. 2 and other related parts of the embodiment involved in FIG. 2, which is not repeated here.

**In step S6103,** a seventh message sent by the first network element is received.

Regarding an optional implementation of step S6103, reference may be made to the optional implementation of step S2108 in FIG. 2 and other related parts of the embodiment involved in FIG. 2, which is not repeated here.

Optionally, an identifier of the first terminal in the seventh message is included in a third message sent by the first terminal 101 to the first network element 1031 via the access network device. Regarding its optional implementation, reference may be made to the optional implementation of step S2107 in FIG. 2 and other related parts of the embodiment involved in FIG. 2, which is not repeated here.

**In step S6104,** a subscription corresponding to the first terminal is retrieved.

Regarding an optional implementation of step S6104, reference may be made to the optional implementation of step S2109 in FIG. 2 and other related parts of the embodiment involved in FIG. 2, which is not repeated here.

In some embodiments, the second network element 1032 is, for example, a UDM or a UDR.

The communication method according to the embodiments of the present disclosure may include at least one of step S6101 to step S6104. For example, steps S6101+S6102 may be implemented as an independent embodiment, and steps S6103+S6104 may be implemented as an independent embodiment, but are not limited to this.

In some embodiments, steps 6101 and 6103 may be performed in an exchanged order or simultaneously, and steps 6102 and 6104 may be performed in an exchanged order or simultaneously.

FIG. 6B is a flowchart illustrating a relay communication method according to an embodiment of the present disclosure. As shown in FIG. 6B, an embodiment of the present disclosure relates to a relay communication method, performed by a second network element, and the method includes the following steps.

**In step S6201,** a sixth message sent by a first network element is received.

Regarding an optional implementation of step S6201, reference may be made to the optional implementations of step S2103 in FIG. 2 and step S6101 in FIG. 6A, and other related parts of the embodiments involved in FIG. 2 and FIG. 6A, which is not repeated here.

**In step S6202,** a subscription corresponding to a second terminal is retrieved.

Regarding an optional implementation of step S6202, reference may be made to the optional implementations of step S2104 in FIG. 2 and step S6102 in FIG. 6A, and other related parts of the embodiments involved in FIG. 2 and FIG. 6A, which is not repeated here.

In some embodiments, the second network element 1032 is, for example, a UDM or a UDR.

The communication method according to the embodiments of the present disclosure may include at least one of step S6201 to step S6202. For example, step S6201 may be implemented as an independent embodiment, step S6202 may be implemented as an independent embodiment, and steps S6201+S6202 may be implemented as an independent embodiment, which are not limited herein.

FIG. 7A is an interactive schematic diagram illustrating a relay communication method according to an embodiment of the present disclosure. As shown in FIG. 7A, an embodiment of the present disclosure relates to a relay communication method, which includes the following steps.

**In step S7101,** a second terminal sends a first message to a first terminal, in which the first message includes an identifier of the second terminal.

Regarding an optional implementation of step S7101, reference may be made to the optional implementations of step S2101 in FIG. 2, step S3101 in FIG. 3A and step S4101 in FIG. 4A, and other related parts of the embodiments involved in FIG. 2, FIG. 3, FIG. 4, FIG. 5 and FIG. 6, which is not repeated here.

**In step S7102,** the first terminal sends the first message to a first network element via an access network device.

Regarding an optional implementation of step S7102, reference may be made to the optional implementations of step S2102 in FIG. 2, step S3102 in FIG. 3A, step S4102 in FIG. 4A and step S5101 in FIG. 5A, and other related parts of the embodiments involved in FIG. 2, FIG. 3, FIG. 4, FIG. 5 and FIG. 6, which is not repeated here.

**In step S7103,** the first network element sends a sixth message to a second network element, in which the sixth message includes the identifier of the second terminal.

Regarding an optional implementation of step S7103, reference may be made to the optional implementations of step S2103 in FIG. 2, step S5102 in FIG. 5A and step S6101 in FIG. 6A, and other related parts of the embodiments involved in FIG. 2, FIG. 3, FIG. 4, FIG. 5 and FIG. 6, which is not repeated here.

**In step S7104,** the second network element retrieves a subscription corresponding to the second terminal from stored subscriptions according to the identifier of the second terminal, in which the subscription corresponding to the second terminal is used to indicate that the second terminal supports a store-and-forward communication with the first terminal.

Regarding an optional implementation of step S7104, reference may be made to the optional implementations of step S2104 in FIG. 2 and step S6102 in FIG. 6A, and other related parts of the embodiments involved in FIG. 2, FIG. 3, FIG. 4, FIG. 5 and FIG. 6, which is not repeated here.

In some embodiments, the above-described method may include the method described in the above-described embodiments of the communication system, the first terminal, the second terminal, the core network device, the first network element, the second network element, and the like, which is not repeated here.

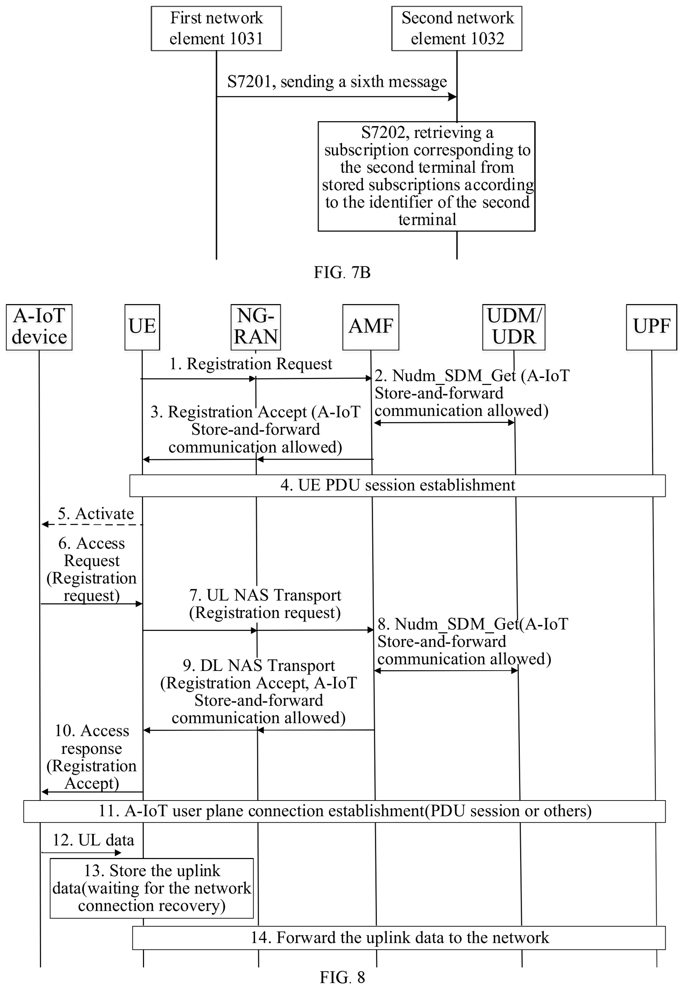

FIG. 7B is an interactive schematic diagram illustrating a relay communication method according to an embodiment of the present disclosure. As shown in FIG. 7B, an embodiment of the present disclosure relates to a relay communication method, which is performed by a core network device 103 including a first network element 1031 and a second network element 1032, and the method includes the following steps.

**In step S7201,** the first network element sends a sixth message to the second network element, in which the sixth message includes an identifier of a second terminal.

Regarding an optional implementation of step S7201, reference may be made to the optional implementations of step S2101 in FIG. 2, step S5101 in FIG. 5A and step S6101 in FIG. 6A, and other related parts of the embodiments involved in FIG. 2, FIG. 3, FIG. 4, FIG. 5 and FIG. 6, which is not repeated here.

**In step S7202,** the second network element retrieves a subscription corresponding to the second terminal from stored subscriptions according to the identifier of the second terminal, in which the subscription corresponding to the second terminal is used to indicate that the second terminal supports a store-and-forward communication with the first terminal.

Regarding an optional implementation of step S7202, reference may be made to the optional implementations of step S2102 in FIG. 2 and step S6102 in FIG. 6A, and other related parts of the embodiments involved in FIG. 2, FIG. 3, FIG. 4, FIG. 5 and FIG. 6, which is not repeated here.

In some embodiments, the above-described method may include the method described in the above-described embodiments of the core network device, the first network element, the second network element, and the like, which is not repeated here.

FIG. 8 is an interactive schematic diagram illustrating a system of a relay communication method according to an embodiment of the present disclosure. As shown in FIG. 8, an embodiment of the present disclosure relates to a relay communication method, which includes at least one of the following steps.
1. The UE sends a registration request to a next generation radio access network (NG-RAN), including a registration type, a UE ID (e.g. SUCI or 5G-GUTI or PEI), security parameters. The NG-RAN forwards the registration request to an AMF via an N2 link.
2. The AMF sends a Nudm_SDM_Get request to a UDM to retrieve the UE's subscription, which includes the UE ID received in Step 1. The UDM may retrieve the UE's subscription from a UDR if the UE's subscription is not stored in the UDM. The UDM sends a Nudm_SDM_Get response to the AMF with the UE's subscription including "A-IoT store-and-forward communication allowed".
3. After authentication and authorization of the UE, the AMF sends a registration accept message to the UE via the NG-RAN, which includes an "A-IoT store-and-forward communication allowed" indication.
4. The UE may initiate a PDU session establishment procedure to establish a user plane connection from the UE to a UPF.
5. The UE may send radio energy to an A-IoT device, then may send an "activate" radio signaling indication to the A-IoT device.
6. After the A-IoT device harvests enough energy for communication, it sends an access request with the registration request to the AMF via the UE, which may include its ID and other parameters for registration.
7. The UE sends a UL NAS transport message to the AMF via an RAN, in which the registration request from the A-IoT device is included in a NAS container (NAS in NAS).
8. The AMF sends a Nudm_SDM_Get request to the UDM to retrieve the A-IoT device's subscription, which includes the A-IoT device's ID received in Step 7. The UDM may retrieve the A-IoT device's subscription from the UDR if the A-IoT device's subscription is not stored in the UDM. The UDM sends a Nudm_SDM_Get response to the AMF with the A-IoT device's subscription including "A-IoT store-and-forward communication allowed".
9. After authentication and authorization of the A-IoT device, the AMF sends a DL NAS transport message to the UE, which includes a registration accept message ("A-IoT store-and-forward communication allowed") to the A-IoT device and an "A-IoT store-and-forward communication allowed" indication to the UE. If the UE receives the "A-IoT store-and-forward communication allowed" indication in this step and Step 2, it means that the UE may perform A-IoT store-and-forward communication for this A-IoT device.
10. The UE forwards the registration accept message received in Step 9 to the A-IoT device in an access response, where the registration accept message includes the "A-IoT store-and-forward communication allowed" indication, which means that the network authorizes the A-IoT device to perform the A-IoT store-and-forward communication. The UE may indicate to the A-IoT device that it may perform the A-IoT store-and-forward communication for this A-IoT device, this indication is included in the access response and out of a container of the registration accept message. The A-IoT device may learn that the network has authorized the A-IoT store-and-forward communication and the UE may perform the A-IoT store-and-forward communication.
11. The A-IoT device initiates a user plane connection to the network and the application, which may be a PDU session or other types of connections.
12. The A-IoT device may send uplink data to the UE, which should be forward to the network if the UE may connect to the network, otherwise the UE should store the data.
13. The UE stores the uplink data and waits for the network connection recovery.
14. When the network connection is available, the UE shall forward the stored uplink data to the network.

Embodiments of the present disclosure also provide an apparatus for implementing any of the above methods, for example, an apparatus including units or modules for implementing the steps performed by the terminal in any of the above methods. For another example, another apparatus is also provided, which includes units or modules for implementing the steps performed by the network device (such as an access network device, a core network function node, a core network device and the like) in any of the above methods.

It should be understood that the division of each unit or module in the above device is only a division of logical functions, which may be fully or partially integrated into a physical entity or physically separated in actual implementation. Moreover, the units or modules in the device may be implemented in the form of calling software by a processor: for example, the device includes a processor, which is connected with a memory, and instructions are stored in the memory, and the processor calls the instructions stored in the memory to implement any of the above methods or implement the functions of the units or modules of the device, in which the processor is a generalpurpose processor, such as a central processing unit (CPU) or a microprocessor, and the memory is a memory in the device or a memory outside the device. Optionally, the units or modules in the device may be implemented in the form of hardware circuits, and some or all of the functions of the units or modules may be implemented by designing the hardware circuits, which may be understood as one or more processors; for example, in an implementation, the above-mentioned hardware circuit is an application-specific integrated circuit (ASIC), and some or all of the functions of the above-mentioned units or modules are implemented by designing the logical relationship of elements in the circuit; for another example, in another implementation, the above hardware circuit may be implemented by a programmable logic device (PLD). Take a field programmable gate array (FPGA) as an example, it may include a large number of logic gates, and the connection relationship between the logic gates is configured by configuration files, implementing the functions of some or all of the above units or modules. All the units or modules of the above device may be implemented entirely in the form of calling software by the processor, or entirely in the form of hardware circuits, or partially in the form of calling software by a processor, and the rest is implemented in the form of hardware circuits.

In embodiments of the present disclosure, the processor is a circuit with signal processing capability. In an implementation, the processor may be a circuit with instruction reading and running capability, such as a central processing unit (CPU), a microprocessor, a graphics processing unit (GPU) (which may be understood as a microprocessor), or a digital signal processor (DSP). In another implementation, the processor may realize certain functions through the logical relationship of hardware circuits, which are fixed or reconfigurable. For example, the processor is a hardware circuit implemented by an application-specific integrated circuit (ASIC) or a programmable logic device (PLD), such as an FPGA. In the reconfigurable hardware circuit, the process that the processor loads the configuration document to implement the hardware circuit configuration may be understood as the process that the processor loads instructions to implement the functions of some or all of the above units or modules. Furthermore, it may also be a hardware circuit designed for artificial intelligence, which may be understood as the ASIC, such as neural network processing unit (NPU), tensor processing unit (TPU), deep learning processing unit (DPU) and so on.

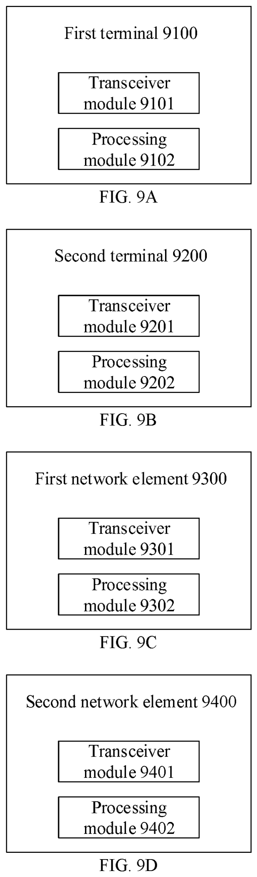

FIG. 9A is a block diagram illustrating a first terminal according to an embodiment of the present disclosure. As shown in FIG. 9A, the first terminal 9100 may include at least one of a transceiver module 9101 or a processing module 9102. In some embodiments, the transceiver module 9101 is configured to receive a first message sent by a second terminal, in which the first message includes an identifier of the second terminal; and to send the first message to a first network element via an access network device, in which the identifier of the second terminal is used to retrieve a subscription corresponding to the second terminal from subscriptions stored in a second network element, and the subscription corresponding to the second terminal is used to indicate that the second terminal supports a store-and-forward communication with the first terminal. Optionally, the above transceiver module is configured to perform at least one of the communication steps such as sending and/or receiving (such as step 2101, step 2102, step 2105, step 2106, step 2107, step 2110, step 2111, step 2112 and step 2114, but not limited to this) performed by the first terminal 101 in any of the above methods, which is not repeated here. Optionally, the above processing module is configured to perform at least one of other steps (such as step 2113, but not limited to this) performed by the first terminal 101 in any of the above methods, which is not repeated here.

FIG. 9B is a block diagram illustrating a second terminal according to an embodiment of the present disclosure. As shown in FIG. 9B, an access network device 9200 may include at least one of a transceiver module 9201 or a processing module 9202. In some embodiments, the transceiver module 9201 is configured to send a first message to a first terminal, in which the first message is used to be sent by the first terminal to a first network element via an access network device, the first message includes an identifier of the second terminal, the identifier of the second terminal is used to retrieve a subscription corresponding to the second terminal from subscriptions stored in a second network element, and the subscription corresponding to the second terminal is used to indicate that the second terminal supports a store-and-forward communication with the first terminal. Optionally, the above transceiver module is configured to perform at least one of the communication steps such as sending and/or receiving (such as step 2101, step 2106, step 2111 and step 2112, but not limited to this) performed by the second terminal 102 in any of the above methods, which is not repeated here. Optionally, the above processing module is configured to perform at least one of other steps performed by the second terminal 102 in any of the above methods, which is not repeated here.

FIG. 9C is a block diagram illustrating a first network element according to an embodiment of the present disclosure. As shown in FIG. 9C, the first network element 9300 may include at least one of a transceiver module 9301 or a processing module 9302. In some embodiments, the transceiver module 9301 is configured to receive a first message sent by a first terminal via an access network device, in which the first message includes an identifier of a second terminal; and to send a sixth message to a second network element, in which the sixth message includes the identifier of the second terminal, the identifier of the second terminal is used to retrieve a subscription corresponding to the second terminal from subscriptions stored in the second network element, and the subscription corresponding to the second terminal is used to indicate that the second terminal supports a store-and-forward communication with the first terminal. Optionally, the above transceiver module is configured to perform at least one of the communication steps such as sending and/or receiving (such as step 2101, step 2103, step 2105, step 2107, step 2108 and step 2110, but not limited to this) performed by the first network element 1031 in any of the above methods, which is not repeated here. Optionally, the above processing module is configured to perform at least one of other steps performed by the first network element 1031 in any of the above methods, which is not repeated here.

FIG. 9D is a block diagram illustrating a second network element according to an embodiment of the present disclosure. As shown in FIG. 9D, the second network element 9400 may include at least one of a transceiver module 9401 or a processing module 9402. In some embodiments, the transceiver module 9401 is configured to receive a sixth message sent by a first network element, in which the sixth message includes an identifier of a second terminal, and the processing module 9402 is configured to retrieve, according to the identifier of the second terminal, a subscription corresponding to the second terminal from stored subscriptions, in which the subscription corresponding to the second terminal is used to indicate that the second terminal supports a store-and-forward communication with a first terminal. Optionally, the above transceiver module is configured to perform at least one of the communication steps such as sending and/or receiving (such as step 2103 and step 2108, but not limited to this) performed by the second network element 1032 in any of the above methods, which is not repeated here. Optionally, the above processing module is configured to perform at least one of other steps (such as step 2104 and step 2109, but not limited to this) performed by the second network element 1032 in any of the above methods, which is not repeated here.

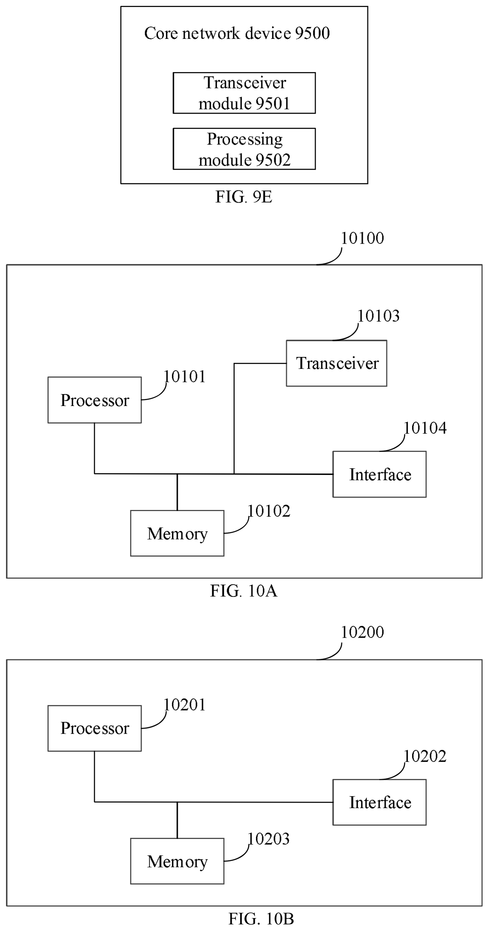

FIG. 9E is a block diagram illustrating a core network device according to an embodiment of the present disclosure. As shown in FIG. 9E, the core network device 9500 may include at least one of a transceiver module 9501 or a processing module 9502. In some embodiments, the transceiver module 9501 is configured to receive a first message sent by a first terminal via an access network device, in which the first message includes an identifier of a second terminal, the identifier of the second terminal is used to retrieve a subscription corresponding to the second terminal from subscriptions stored in the core network device, and the subscription corresponding to the second terminal is used to indicate that the second terminal supports a store-and-forward communication with the first terminal. Optionally, the above transceiver module is configured to perform at least one of the communication steps such as sending and/or receiving performed by the core network device 103 in any of the above methods, which is not repeated here. Optionally, the above processing module is configured to perform at least one of other steps performed by the second terminal 102 in any of the above methods, which is not repeated here.

In some embodiments, the transceiver module may include a sending module and/or a receiving module, and the sending module and the receiving module may be separate or integrated together. Optionally, the transceiver module may be replaced with the transceiver.

In some embodiments, the processing module may be one module or include multiple sub-modules. Optionally, the multiple sub-modules respectively perform all or part of the steps required by the processing module. Optionally, the processing module may be replaced with the processor.

FIG. 10A is a block diagram illustrating a communication device 10100 according to an embodiment of the present disclosure. The communication device 10100 may be a network device (e.g., an access network device, a core network device, etc.), or may be a terminal (e.g., a user equipment, etc.), or may be a chip, a chip system, or a processor supporting the network device to implement any of the above methods, or may be a chip, a chip system, or a processor supporting the terminal to implement any of the above methods. The communication device 10100 may be used to implement the method described in the above-mentioned method embodiments, for details, reference may be made to the description in the above-mentioned method embodiments.

As shown in FIG. 10A, the communication device 10100 includes one or more processors 10101. The processor 10101 may be a general-purpose processor or a special-purpose processor, for example, a baseband processor or a central processing unit. The baseband processor may be used to process communication protocols and communication data, and the central processor may be used to control communication devices (such as a base station, a baseband chip, a terminal, a terminal chips, a DU or a CU, etc.), execute programs, and process program data. The communication device 10100 is used to perform any of the above methods.

In some embodiments, the communication device 10100 further includes one or more memories 10102 for storing instructions. Optionally, all or part of the memory 10102 may be located outside the communication device 10100.

In some embodiments, the communication device 10100 further includes one or more transceivers 10103. In a case where the communication device 10100 includes one or more transceivers 10103, the transceiver 10103 performs at least one of the communication steps such as sending and/or receiving (such as step 2101, step 2102, step 2103, step 2105, step 2106, step 2107, step 2108, step 2110, step 2111, step 2112 and step 2114, but not limited to this) in the above method, and the processor 10101 performs at least one of other steps (such as step S2104, step S2109 and step S2113, but not limited to this).

In some embodiments, the transceiver may include a receiver and/or a transmitter, which may be separate or integrated. Optionally, the terms such as transceiver, transceiver unit, transceiving machine, transceiver circuit, etc. may be replaced with each other, and the terms such as transmitter, transmitting unit, transmitting machine, transmitting circuit and the like may be replaced with each other, and the terms such as receiver, receiving unit, receiving machine, receiving circuit and the like may be replaced with each other.

In some embodiments, the communication device 10100 may include one or more interface circuits 10104. Optionally, the interface circuit 10104 is connected to the memory 10102. The interface circuit 10104 may be used to receive signals from the memory 10102 or other devices, and may be used to send signals to the memory 10102 or other devices. For example, the interface circuit 10104 may read instructions stored in the memory 10102 and send the instructions to the processor 10101.

The communication device 10100 described in the above embodiments may be a network device or a terminal, but the scope of the communication device 10100 described in the present disclosure is not limited to this. The structure of the communication device 10100 may not be limited by FIG. 10A. The communication device may be a stand-alone device or may be part of a larger device. For example, the communication device may be: 1) a stand-alone integrated circuit (IC), or a chip, or a chip system or subsystem; 2) a set of one or more ICs, in which optionally, the set of ICs may also include a storage component for storing data and programs; 3) an ASIC, such as a modem; 4) a module that may be embedded in other devices; (5) a receiver, a terminal device, an intelligent terminal device, a cellular phone, a wireless device, a handheld device, a mobile unit, an in-vehicle device, a network device, a cloud device, an artificial intelligence device, etc.; (6) others.

FIG. 10B is a block diagram illustrating a chip 10200 according to an embodiment of the present disclosure. In a case where the communication device 10100 may be a chip or a chip system, reference may be made to the block diagram of the chip 10200 shown in FIG. 10B, which is not limited herein.

The chip 10200 includes one or more processors 10201, and the chip 10200 is used to perform any of the above methods.

In some embodiments, the chip 10200 also includes one or more interface circuits 10202. Optionally, the interface circuit 10202 is connected to the memory 10203. The interface circuit 10202 may be used to receive signals from the memory 10203 or other devices, and the interface circuit 10202 may be used to send signals to the memory 10203 or other devices. For example, the interface circuit 10202 may read instructions stored in the memory 10203 and send the instructions to the processor 10201.

In some embodiments, the interface circuit 10202 performs at least one of the communication steps such as sending and/or receiving (such as step 2101, step 2102, step 2103, step 2105, step 2106, step 2107, step 2108, step 2110, step 2111, step 2112 and step 2114, but not limited to this) in the above method, and the processor 10201 performs at least one of other steps (such as step S2104, step S2109 and step S2113, but not limited to this).

In some embodiments, the terms such as interface circuit, interface, transceiver pin, transceiver and the like may be replaced with each other.

In some embodiments, the chip 10200 further includes one or more memories 10203 for storing instructions. Optionally, all or part of the memory 10203 may be outside the chip 10200.

The present disclosure further proposes a storage medium on which instructions are stored, which, when executed on the communication device 10100, cause the communication device 10100 to perform any of the above methods. Optionally, the storage medium is an electronic storage medium. Optionally, the storage medium is a computer-readable storage medium, but it is not limited to this, and it may also be a storage medium readable by other devices. Optionally, the storage medium may be a non-transitory storage medium, but it is not limited to this, and it may also be a temporary storage medium.

The present disclosure further proposes a program product which, when executed by the communication device 10100, causes the communication device 10100 to perform any of the above methods. Optionally, the program product is a computer program product.

The present disclosure further proposes a computer program that, when run on a computer, causes the computer to perform any of the above methods.

## Claims

1. A relay communication method, performed by a first terminal, comprising:
receiving a first message sent by a second terminal, wherein the first message comprises an identifier of the second terminal; and
sending the first message to a first network element via an access network device, wherein the identifier of the second terminal is used to retrieve a subscription corresponding to the second terminal from subscriptions stored in a second network element, and the subscription corresponding to the second terminal is used to indicate that the second terminal supports a store-and-forward communication with the first terminal.

2. The method of claim 1, further comprising:
receiving a second message sent by the first network element via the access network device, wherein the second message is used to indicate that the store-and-forward communication between the second terminal and the first terminal is authorized; and
sending the second message to the second terminal.

3. The method of claim 1 or 2, further comprising:
sending a third message to the first network element via the access network device, wherein the third message comprises an identifier of the first terminal, the identifier of the first terminal is used to retrieve a subscription corresponding to the first terminal from the subscriptions stored in the second network element, and the subscription corresponding to the first terminal is used to indicate that the first terminal supports the store-and-forward communication with the second terminal; and
receiving a fourth message sent by the first network element via the access network device, wherein the fourth message is used to indicate that the store-and-forward communication between the first terminal and the second terminal is authorized.

4. The method of claim 3, further comprising:
sending a fifth message to the second terminal, wherein the fifth message is used to instruct the second terminal to perform the store-and-forward communication with the first terminal.

5. The method of any one of claims 1 to 4, further comprising:
in a case where a connection between the first terminal and the access network device is not available, receiving and storing information sent by the second terminal.

6. The method of any one of claims 1 to 4, further comprising:
in a case where a connection between the first terminal and the access network device is available, sending information sent by the second terminal and stored by the first terminal to the access network device; and/or
receiving information sent by the second terminal, and forwarding the information sent by the second terminal to the access network device.

7. A relay communication method, performed by a second terminal, comprising:
sending a first message to a first terminal,
wherein the first message is used to be sent by the first terminal to a first network element via an access network device, the first message comprises an identifier of the second terminal, the identifier of the second terminal is used to retrieve a subscription corresponding to the second terminal from subscriptions stored in a second network element, and the subscription corresponding to the second terminal is used to indicate that the second terminal supports a store-and-forward communication with the first terminal.

8. The method of claim 7, further comprising:
receiving a second message sent by the first terminal, wherein the second message is sent by the first network element to the first terminal via the access network device, and the second message is used to indicate that the store-and-forward communication between the second terminal and the first terminal is authorized.

9. The method of claim 8, further comprising:
receiving a fifth message sent by the first terminal, wherein the fifth message is used to instruct the second terminal to perform the store-and-forward communication with the first terminal.

10. The method of any one of claims 7 to 9, further comprising:
in a case where a connection between the first terminal and the access network device is not available, sending information sent to the first terminal, wherein the information is stored in the first terminal.

11. The method of any one of claims 7 to 9, further comprising:
in a case where a connection between the first terminal and the access network device is available, forwarding, by the first terminal, information stored in the first terminal to the access network device; and/or
in a case where a connection between the first terminal and the access network device is available, sending information to the first terminal, wherein the information is forwarded by the first terminal to the access network device.

12. A relay communication method, performed by a first network element, comprising:
receiving a first message sent by a first terminal via an access network device, wherein the first message comprises an identifier of a second terminal; and
sending a sixth message to a second network element, wherein the sixth message comprises the identifier of the second terminal, the identifier of the second terminal is used to retrieve a subscription corresponding to the second terminal from subscriptions stored in the second network element, and the subscription corresponding to the second terminal is used to indicate that the second terminal supports a store-and-forward communication with the first terminal.

13. The method of claim 12, further comprising:
sending a second message to the first terminal via the access network device, wherein the second message is sent by the first terminal to the second terminal, and the second message is used to indicate that the store-and-forward communication between the second terminal and the first terminal is authorized.

14. The method of claim 1 or 2, further comprising:
receiving a third message sent by the first terminal via the access network device, wherein the third message comprises an identifier of the first terminal;
sending a seventh message to the second network element, wherein the seventh message comprises the identifier of the first terminal, the identifier of the first terminal is used to retrieve a subscription corresponding to the first terminal from the subscriptions stored in the second network element, and the subscription corresponding to the first terminal is used to indicate that the first terminal supports the store-and-forward communication with the second terminal; and
sending a fourth message to the first terminal via the access network device, wherein the fourth message is used to indicate that the store-and-forward communication between the first terminal and the second terminal is authorized.

15. A relay communication method, performed by a second network element, comprising:
receiving a sixth message sent by a first network element, wherein the sixth message comprises an identifier of a second terminal; and
retrieving, according to the identifier of the second terminal, a subscription corresponding to the second terminal from stored subscriptions, wherein the subscription corresponding to the second terminal is used to indicate that the second terminal supports a store-and-forward communication with a first terminal, and
wherein the identifier of the second terminal is comprised in a first message sent by the first terminal to the first network element via an access network device.

16. The method of claim 15, further comprising:
receiving a seventh message sent by the first network element, wherein the seventh message comprises an identifier of the first terminal; and
retrieving, according to the identifier of the first terminal, a subscription corresponding to the first terminal from the stored subscriptions, wherein the subscription corresponding to the first terminal is used to indicate that the first terminal supports the store-and-forward communication with the second terminal, and
wherein the identifier of the first terminal is comprised in a third message sent by the first terminal to the first network element via the access network device.

17. A relay communication method, performed by a core network device, comprising:
receiving a first message sent by a first terminal via an access network device, wherein the first message comprises an identifier of a second terminal, the identifier of the second terminal is used to retrieve a subscription corresponding to the second terminal from subscriptions stored in the core network device, and the subscription corresponding to the second terminal is used to indicate that the second terminal supports a store-and-forward communication with the first terminal.

18. The method of claim 17, further comprising:
sending a second message to the first terminal via the access network device, wherein the second message is sent by the first terminal to the second terminal, and the second message is used to indicate that the store-and-forward communication between the second terminal and the first terminal is authorized.

19. The method of claim 17 or 18, further comprising:
receiving a third message sent by the first terminal via the access network device, wherein the third message comprises an identifier of the first terminal, the identifier of the first terminal is used to retrieve a subscription corresponding to the first terminal from the stored subscriptions in the core network device, and the subscription corresponding to the first terminal is used to indicate that the first terminal supports the store-and-forward communication with the second terminal; and
sending a fourth message to the first terminal via the access network device, wherein the fourth message is sent by the first terminal to the second terminal, and the fourth message is used to indicate that the store-and-forward communication between the first terminal and the second terminal is authorized.

20. A relay communication method, comprising:
sending, by a first network element, a sixth message to a second network element, wherein the sixth message comprises an identifier of a second terminal; and
retrieving, by the second network element, according to the identifier of the second terminal, a subscription corresponding to the second terminal from stored subscriptions, wherein the subscription corresponding to the second terminal is used to indicate that the second terminal supports a store-and-forward communication with a first terminal, and
wherein the identifier of the second terminal is comprised in a first message sent by the first terminal to the first network element via an access network device.

21. The method of claim 20, further comprising:
sending, by the first network element, a seventh message to the second network element, wherein the seventh message comprises an identifier of the first terminal; and
retrieving, by the second network element, according to the identifier of the first terminal, a subscription corresponding to the first terminal from the stored subscriptions, wherein the subscription corresponding to the first terminal is used to indicate that the first terminal supports the store-and-forward communication with the second terminal, and
wherein the identifier of the first terminal is comprised in a third message sent by the first terminal to the first network element via the access network device.

22. A first terminal, comprising:
a transceiver module, configured to receive a first message sent by a second terminal, wherein the first message comprises an identifier of the second terminal, and
wherein the transceiver module is further configured to send the first message to a first network element via an access network device, the identifier of the second terminal is used to retrieve a subscription corresponding to the second terminal from subscriptions stored in a second network element, and the subscription corresponding to the second terminal is used to indicate that the second terminal supports a store-and-forward communication with the first terminal.

23. A second terminal, comprising:
a transceiver module, configured to send a first message to a first terminal,
wherein the first message is used to be sent by the first terminal to a first network element via an access network device, the first message comprises an identifier of the second terminal, the identifier of the second terminal is used to retrieve a subscription corresponding to the second terminal from subscriptions stored in a second network element, and the subscription corresponding to the second terminal is used to indicate that the second terminal supports a store-and-forward communication with the first terminal.

24. A first network element, comprising:
a transceiver module, configured to receive a first message sent by a first terminal via an access network device, wherein the first message comprises an identifier of a second terminal, and
wherein the transceiver module is further configured to send a sixth message to a second network element, the sixth message comprises the identifier of the second terminal, the identifier of the second terminal is used to retrieve a subscription corresponding to the second terminal from subscriptions stored in the second network element, and the subscription corresponding to the second terminal is used to indicate that the second terminal supports a store-and-forward communication with the first terminal.

25. A second network element, comprising:
a transceiver module, configured to receive a sixth message sent by a first network element, wherein the sixth message comprises an identifier of a second terminal; and
a processing module, configured to retrieve, according to the identifier of the second terminal, a subscription corresponding to the second terminal from stored subscriptions, wherein the subscription corresponding to the second terminal is used to indicate that the second terminal supports a store-and-forward communication with a first terminal, and
wherein the identifier of the second terminal is comprised in a first message sent by the first terminal to the first network element via an access network device.

26. A core network device, comprising:
a transceiver module, configured to receive a first message sent by a first terminal via an access network device, wherein the first message comprises an identifier of a second terminal, the identifier of the second terminal is used to retrieve a subscription corresponding to the second terminal from subscriptions stored in the core network device, and the subscription corresponding to the second terminal is used to indicate that the second terminal supports a store-and-forward communication with the first terminal.

27. A communication device, comprising:
one or more processors,
wherein the communication device is configured to perform the relay communication method of any one of claims 1 to 19.

28. A communication system, comprising:
a first terminal, configured to perform the relay communication method of any one of claims 1 to 6;
a second terminal, configured to perform the relay communication method of any one of claims 7 to 11; and
a core network device, configured to perform the relay communication method of any one of claims 17 to 19.

29. The system of claim 28, further comprising:
a first network element, configured to perform the relay communication method of any one of claims 12 to 14; and
a second network element, configured to perform the relay communication method of any one of claims 15 to 16.

30. A storage medium having stored therein instructions that, when executed on a communication device, cause the communication device to perform the relay communication method of any one of claims 1 to 6 or 7 to 11 or 12 to 14 or 15 to 16 or 17 to 19.
